Europäisches Patentamt

European Patent Office

Office européen des brevets

(19)

(11) EP 0 788 645 B1

(12) **EUROPÄISCHE PATENTSCHRIFT**

(45) Veröffentlichungstag und Bekanntmachung des Hinweises auf die Patenterteilung:
**12.03.2003 Patentblatt 2003/11**

(21) Anmeldenummer: **96921881.7**

(22) Anmeldetag: **03.07.1996**

(51) Int Cl.$^7$: **G08C 15/00**, G01P 3/489, F16D 66/02

(86) Internationale Anmeldenummer:
**PCT/DE96/01178**

(87) Internationale Veröffentlichungsnummer:
**WO 97/008674 (06.03.1997 Gazette 1997/11)**

(54) **SYSTEM ZUR VERÄNDERUNG EINES DREHZAHLSIGNALS**

SYSTEM FOR ALTERING A REVOLUTION SPEED SIGNAL

SYSTEME POUR MODIFIER UN SIGNAL DE VITESSE DE ROTATION

(84) Benannte Vertragsstaaten:
**AT BE CH DE DK ES FI FR GB GR IE IT LI LU MC NL PT SE**

(30) Priorität: **26.08.1995 DE 19531422**
**15.12.1995 DE 19546812**
**08.03.1996 DE 19609062**
**10.05.1996 DE 19618867**

(43) Veröffentlichungstag der Anmeldung:
**13.08.1997 Patentblatt 1997/33**

(73) Patentinhaber: **ROBERT BOSCH GMBH**
**70442 Stuttgart (DE)**

(72) Erfinder:
• OTT, Karl
  **D-71706 Markgröningen (DE)**
• SCHNEIDER, Thomas
  **D-71706 Markgröningen (DE)**
• LEHNER, Michael
  **D-75417 Mühlacker (DE)**
• WALTHER, Michael
  **D-71636 Ludwigsburg (DE)**

(56) Entgegenhaltungen:
EP-A- 0 276 368     DE-A- 2 606 012
DE-A- 3 703 658     DE-C- 4 322 440
US-A- 3 812 710

EP 0 788 645 B1

**Beschreibung**

Stand der Technik

Die Erfindung geht aus von einem System zur Veränderung eines die Drehzahl wenigstens eines Fahrzeugrades repräsentierenden Signals bei einem Kraftfahrzeug mit den Merkmalen des Oberbegriffs des Anspruchs 1. Zur Regelung bzw. Steuerung der Bremskraft, Antriebskraft und/oder der Fahrdynamik eines Kraftfahrzeugs ist es bekannt, die Drehzahlen der Fahrzeugräder zu messen. Hierzu werden im Stand der Technik vielerlei Methoden (bspw. Hall- oder magnetoresistive Sensoren) ausgeführt. Darüber hinaus ist es bekannt, die Abnutzung des Bremsbelages einer Fahrzeugbremse zu ermitteln, indem beispielsweise in einer gewissen Tiefe der Bremsbeläge Kontaktstifte eingelassen sind, die einen Kontakt auslösen, wenn der Bremsbelag bis zu dieser Tiefe abgenutzt ist.

So zeigt beispielsweise der Artikel "Integrierte Hall-Effekt-Sensoren zur Positions- und Drehzahlerkennung", elektronik industrie 7-1995, Seiten 29 bis 31 aktive Sensoren zum Einsatz im Kraftfahrzeug für Antiblockier- Antriebsschlupf-, Motor- und Getriebesteuerungs- bzw. -regelungssysteme. Solche Sensoren liefern in einer Zweidrahtbeschaltung zwei Strompegel, die in einem entsprechenden Steuergerät durch einen Meßwiderstand in zwei Spannungspegel umgesetzt werden.

Neben den erwähnten Hall-Effekt-Sensoren ist auch der Einsatz von magnetoresistiven Sensoren zur Drehzahlerfassung beispielsweise aus dem Artikel "Neue, alternative Lösungen für Drehzahlsensoren im Kraftfahrzeug auf magnetoresisitiver Basis", VDI-Berichte Nr.509, 1984 bekannt.

In der DE,C2,26 06 012 (US 4,076,330) wird eine spezielle gemeinsame Anordnung zur Erfassung des Verschleißes eines Bremsbelages und zur Erfassung der Raddrehzahl beschrieben. Hierzu wird der erfaßte Bremsbelagverschleiß und die durch einen induktiv arbeitenden Sensor erfaßte Raddrehzahl über eine gemeinsame Signalleitung zu einer Auswerteeinheit geführt. Dies wird dadurch erreicht, daß der Raddrehzahlsensor in Reaktion auf einen erfaßten Bremsbelagverschleiß ganz oder teilweise kurzgeschlossen wird.

Andere Systeme wie sie beispielsweise aus der DE,C,43,22,440 beschrieben werden, benötigen zur Erfassung der Drehzahl und des Bremsbelagverschleißes an einem Rad bzw. einer Radbremse mindestens zwei Signalleitungen zwischen einer Radeinheit und der Auswerteeinheit.

Bei der obengenannten Drehzahlerfassung ist es bekannt, daß der Luftspalt zwischen dem sich drehenden Zahnkranz und dem eigentlichen Sensorelement einen erheblichen Einfluß auf die Qualität des Drehzahlsignals hat. Hierzu sei beispielsweise auf die DE-OS 32 01 811 verwiesen.

Weiterhin benötigt man beispielsweise bei Anfahrhilfen (sogenannten Hillholder) eine Information über die Drehrichtung der Räder. Hier ist insbesondere eine Information darüber notwendig, ob sich das Fahrzeug rückwärts bewegt. Hierzu sei beispielhaft auf die DE-OS 35 10 651 verwiesen.

Die obengenannten sowie weitere Informationen (beispielsweise Bremsbelagverschleiß, Luftspalt, Drehrichtung) werden im allgemeinen radnah erfaßt und in einer radfern angeordneten Steuereinheit ausgewertet. Hierzu müssen die Informationen zur Steuereinheit übertragen werden.

Bei einem Motor (Verbrennungs- und/oder Elektromotor) ist es bekannt, die Motordrehzahl mittels induktiver, magnetoresistiver oder Hall-Sensoren zu erfassen.

Aufgabe der vorliegenden Erfindung ist es, eine möglichst einfache und sichere Übertragung des Drehzahlsignals und weiterer Informationen zu realisieren.

Diese Aufgabe wird durch die kennzeichnenden Merkmale des Anspruchs 1 gelöst.

Vorteile der Erfindung

Die Erfindung geht aus von einem System zur Veränderung eines eine Drehbewegung repräsentierenden Signals mit ersten Mitteln zur Erzeugung eines die Drehbewegung repräsentierenden ersten Signals und zweiten Mitteln zur Erzeugung wenigstens eines eine weitere Information repräsentierenden zweiten Signals. Eine solche Information kann beispielsweise darin bestehen, daß die Richtung der Drehbewegung und/oder der obenerwähnte Luftspalt und/oder der Bremsbelagverschleiß an wenigstens einer Fahrzeugradbremse ermittelt wird. Der Luftspalt kann dabei aus der Amplitude eines mit dem Drehzahlsignal zusammenhängenden Signals erfaßt werden. Weiterhin sind dritte Mittel vorgesehen, mittels der das erste Signal (Drehzahlsignal) abhängig von dem zweiten Signal (Drehrichtung, Luftspalt und/oder Bremsbelagverschleiß) verändert werden kann.

Der Kern der Erfindung liegt nun darin, daß die ersten Mittel derart ausgestaltet sind, daß das erste Signal (Drehzahlsignal) wenigstens zwei erste Stromwerte und/oder zwei erste Spannungswerte annimmt. Weiterhin sind die dritten Mittel erfindungsgemäß derart ausgestaltet, daß zur Veränderung des ersten Signals (Drehzahlsignal) wenigstens einer der ersten Stromwerte und/oder Spannungswerte wenigstens eine bestimmte Zeit lang abhängig von dem zweiten Signal (Drehrichtung, Luftspalt und/oder Bremsbelagverschleiß) zu wenigstens einem zweiten Stromwert und/ oder Spannungswert verändert werden kann.

Die Erfindung hat den Vorteil, daß in einfacher und sicherer Weise über die Ausgangsleitung des Drehzahlfühlers die Zusatzinformationen über die Drehrichtung, den Luftspalt, den Bremsbelagverschleiß und/oder anderer Betriebszustände des Fahrzeugrades, der Fahrzeugbremse und/oder des Fahrzeugmotors übertragen werden können. Hierdurch entfällt beispielsweise die eingangs erwähnte zweite Signalleitung zur ausschließlichen Übertragung der Zusatzinformationen.

Ein weiterer Vorteil der Erfindung besteht darin, daß der Drehzahlfühler und die Erfassung der obengenannten Zusatzinformationen eine kompakte Einheit bildet.

Das erfindungsgemäße System findet vorteilhafterweise bei einem Kraftfahrzeug Verwendung, wobei das erste Signal die Drehzahl eines Fahrzeugrades, die Drehzahl eines als Benzin-, Diesel- und/oder Elektromotor ausgebildeten Fahrzeugmotors und/oder die Drehzahl einer mit dem Fahrzeuggetriebe wirkungsgekoppelten Welle repräsentieren kann.

Bei einer Variante findet die Erfindung Anwendung bei einer Raddrehzahlsensoreinheit, beispielsweise im Zusammenhang mit einem Antiblockier-, Antriebsschlupf- und/oder Fahrdynamikregelungssystem. Hier können die Raddrehzahlinformationen zusammen mit wenigstens einer der obenerwähnten Zusatzinformationen (Drehrichtung, Luftspalt und/oder Bremsbelagverschleiß) von einer radnah angeordneten Sensoreinheit kostengünstig und sicher zu einer radfern angeordneten Steuereinheit geführt werden.

Eine andere Variante der Erfindung zeigt den möglichen Einsatz des erfindungsgemäßen Systems bei der Erfassung einer Motordrehzahl auf. Auch bei dieser Anwendung kann die Motordrehzahlinformation zusammen mit wenigstens einer der obenerwähnten Zusatzinformationen von einer motornah angeordneten Sensoreinheit kostengünstig und sicher zu einer motorfern angeordneten Steuereinheit geführt werden. Als zu übertragende Zusatzinformation ist hier insbesondere an die Information über ein vorliegendes Rückdrehen des Motors gedacht. Ein solches Rückdrehen eines Verbrennungsmotors tritt vor allem beim Start und beim "Abwürgen" des Motors auf. Dabei kann es bei den zur Zeit eingesetzten Systemen zu sogenannten Saugrohrpatschern kommen. Bei konventionellen Drehzahlsensoren (ohne Rückdreherkennung) erhält das Motorsteuergerät beim Rückdrehen des Motors weiterhin ein Drehzahlsignal, ohne unterscheiden zu können, ob es sich um ein Rückdrehen handelt. Die nächste Einspritzung beziehungsweise Zündung wird eingeleitet, wodurch durch die falsche Drehrichtung des Motors der Zündwinkel um große Beträge falsch eingestellt wird. Ist zum Zeitpunkt der Zündung das Kraftstoffeinlaßventil geöffnet, so kommt es zu den obenerwähnten Saugrohrpatschern. Durch diese Saugrohrpatscher können folgende Komponenten zerstört werden:

- Leerlaufsteller.
- Drosselklappe,
- das Saugrohr selbst und
- eventuell der Druckmesser beziehungsweise der bekannte Heißfilmluftmassenmesser.

Wird ein Rückdrehen des Motors erkannt, so können Saugrohrpatscher dadurch vermieden werden, daß keine Zündung ausgelöst wird. Auf diese Weise kann einer Zerstörung der obengenannten Komponenten sicher vorgebeugt werden. Eventuell können diese Komponenten bei der Anwendung des erfindungsgemäßen Systems sogar mit geringeren Anforderungen konzipiert werden. Beispielsweise kann das Saugrohr aus Kunststoff gefertigt werden, was zu Kosten- und Gewichtsersparnissen führen kann.

Der durch das erfindungsgemäße System notwendige Änderungsaufwand an den herkömmlichen Systemen ist relativ gering, da die herkömmliche Sensoreinheit nur um eine Drehrichtungsauswertung und um eine relativ einfache Logik erweitert werden muß. Die erfindungsgemäße Eingangsschaltung des Steuergeräts muß so geändert werden, daß die Signalspannung in Bezug auf zwei Schwellen ausgewertet werden kann. Bezüglich der Geometrie und der Einbaulage ergeben sich keine Veränderungen oder Einschränkungen gegenüber herkömmlichen Sensoren ohne Drehrichtungserkennung.

Die erfindungsgemäßen ersten Mittel können als ein aktiver Drehzahlfühler ausgebildet und die dritten Mittel derart ausgestaltet, daß zur Veränderung des ersten Signals wenigstens einer der ersten Stromwerte wenigstens eine bestimmte Zeit abhängig von dem zweiten Signal zu einem zweiten Stromwert erhöht wird.

In einer vorteilhaften Ausgestaltung der Erfindung weisen die dritten Mittel zur Veränderung der Stromwerte eine Stromquelle auf. Insbesondere ist dabei vorgesehen, daß die dritten Mittel Schaltmittel zum Zu- bzw. Abschalten einer Überlagerung eines durch die Stromquelle induzierten Stromes mit den wenigstens zwei ersten Stromwerten enthalten. In dieser Ausführungsform ist also vorgesehen, daß im Drehzahlsensor eine zusätzliche Stromquelle eingebracht wird, die durch ein Vorliegen bestimmter Informationen (beispielsweise eine Rückwärtsdrehen, ein bestimmter Bremsbelagverschleiß, ein zu großer Luftspalt) aktiviert (oder deaktiviert) wird. Bei einer Aktivierung dieser zusätzlichen Stromquelle wird wenigstens einer der Strompegel, die die zu erfassende Drehzahl repräsentieren, angehoben. Die zusätzliche Stromquelle kann dabei in den Sensor integriert werden oder als diskretes Bauteil ausgebildet sein.

Die Anhebung kann sich dabei auf beide Strompegel beziehen, was einem drehrichtungs-, luftspalt- und/oder bremsbelagverschleißabhängigen Offset auf das gesamte Drehzahlsignal gleichkommt. Insbesondere ist aber vorgesehen,daß nur einer der beiden Strompegel mit einem obenerwähnten Offset versehen werden.

Die Aktivierung der zusätzlichen Stromquelle wird im allgemeinen durch Schaltmittel erreicht, die den Strom dieser zusätzlichen Stromquelle den die Drehzahl repräsentierenden Strompegeln überlagern. Es kann aber auch vorgesehen sein, daß die zusätzliche Stromquelle abhängig von dem Vorliegen einer Rückwärtsdrehens, eines übermäßigen Bremsbelagverschleißes und/oder eines übermäßigen Luftspalts ein- bzw. ausgeschaltet wird.

Die Aktivierung der zusätzlichen Stromquelle kann durch einen ersten Schalter und einen zweiten, vorzugsweise als Transistor ausgebildeten zweiten Schalter geschehen. Im Falle der Erfassung eines übermäßigen Bremsbelagverschleißes ist es vorteilhafterweise, daß der erste Schalter räumlich im Bereich des Bremsbelages und der zweite Schalter räumlich im Bereich des Drehzahlfühlers angebracht ist. Diese Ausführungsform ist insbesondere dann vorteilhaft, wenn die zusätzliche Stromquelle mit dem an sich bekannten Drehzahlfühler in integrierter oder diskreter Bauform eine Baueinheit bildet. Der Schaltzustand des zweiten Schalters kann in bekannter Weise dadurch verändert werden, indem beispielsweise in einer gewissen Tiefe der Bremsbeläge Kontaktstifte eingelassen sind, die einen Kontakt auslösen, wenn der Bremsbelag bis zu dieser Tiefe abgenutzt ist.

Bei dieser Ausführungsform kann vorgesehen sein, daß der Schaltzustand des ersten Schalters abhängig ist von dem Grad des Bremsbelagverschleißes und der Schaltzustand des zweiten Schalters abhängig ist von dem Schaltzustand des ersten Schalters ist.

Der aktive Drehzahlfühler kann derart ausgebildet sein, daß er zur Erzeugung der wenigstens zwei ersten Stromwerte wenigstens zwei Stromquellen aufweist.

Weiterhin sind vorteilhafterweise Übertragungsmittel zur Übertragung des ersten Signals oder des veränderten ersten Signals zu Auswertemitteln (Steuereinheit) vorgesehen. Dabei können in den Auswertemitteln Wandlermittel vorgesehen sein, mittels der die Stromwerte in entsprechende Spannungswerte gewandelt werden.

Zur Auswertung der dem Steuergerät zugeführten Signale kann vorgesehen sein, daß in den Auswertemitteln wenigstens ein Schwellwertvergleich vorgesehen ist, mittels dem die Stromwerte oder die entsprechenden Spannungswerte mit wenigstens einem Schwellwert verglichen werden. Abhängig von dem Vergleichsergebnis können dann Anzeigemittel angesteuert werden, die anzeigen, wann ein übermäßiger Luftspalt und/oder ein übermäßiger Bremsbelagverschleiß vorliegt.

In einer sehr vorteilhaften Ausgestaltung der Erfindung ist vorgesehen, daß die dritten Mittel derart ausgestaltet sind, daß die Zeit, zu der die von dem zweiten Signal abhängige Erhöhung stattfindet, derart bestimmt wird, daß wenigstens einer der zwei ersten Stromwerte dann erhöht wird, wenn dieser Stromwert definiert häufig aufgetreten ist. Diese definierte Häufigkeit kann abhängig von der zu übertragenden Information unterschiedlich gewählt werden.

Insbesondere kann bei dieser letztgenannten Ausgestaltung vorgesehen sein, daß die ersten Mittel derart ausgestaltet sind, daß das erste Signal (Drehzahlsignal) periodisch die zwei ersten Stromwerte annimmt, und daß wenigstens einer der zwei ersten Stromwerte dann erhöht wird, wenn das erste Signal (Drehzahlsignal) diesen Stromwert n-mal angenommen hat, wobei n eine gerade Zahl größer oder gleich Eins ist.

Die zuletztgenannte Ausgestaltung der Erfindung bezieht sich auf den obenerwähnten Offset auf nur einen der beiden Strompegel. Diese Variante hat den Vorteil, daß im Vergleich zu dem obenbeschriebenen informationsabhängigen Offset auf das gesamte Drehzahlsignal hier nur einer der beiden Strompegel, im allgemeinen der High-Pegel, des Drehzahlsignals durch ein Vorliegen einer bestimmten Information (Rückwärtsdrehen, anzeigerelevanter Luftspalt, anzeigerelevanter Bremsbelagverschleiß) erhöht wird. Dadurch läßt sich das Gesamtsignal mit den Informationen bzgl. der Drehzahl und der Information im Steuergerät einfacher auswerten.

Neben der informationsabhängigen Anhebung jedes High-Pegels des Drehzahlsignal kann insbesondere vorgesehen sein, nur jeden n-ten High-Pegel informationsabhängig anzuheben. So kann beispielsweise vorgesehen sein, daß bei Vorliegen eines erfaßten Rückwärtsdrehens jeder 2-te High-Pegel (n=2) angehoben, bei der Erfassung eines übermäßigen Luftspalts jeder 4-te High-Pegel (n=4) und/oder bei der Erfassung eines übermäßigen Bremsbelagverschleißes jeder 8-te High-Pegel (n=8) angehoben wird.

Dies kann durch Zähler bzw. Teiler (counter) erreicht werden, die im Falle des Vorliegens einer Information, beispielsweise eines anzeigerelevanten Bremsbelagverschleißes nur auf jedes n-te High-Signal einen, beispielsweise bremsbelagverschleißabhängigen, Offset schalten. Dadurch wird die durch den Offset bedingte Verlustleistung minimiert. Darüber hinaus hat diese Erfindungsvariante bei der Übertragung des Bremsbelagverschleißes den Vorteil, daß ein eventuelles Prellen des Bremsbelagverschleißschalters keine unkorrekte Anzeige zur Folge hat, da der Offset erst nach Ablauf von n High-Pegeln initiiert wird.

Bei beiden Varianten (Offset auf das Gesamtdrehzahlsignal oder Offset auf n-ten High-Pegel) kann vorgesehen sein, daß die Veränderung des ersten Signals (Drehzahl) abhängig von einem die Temperatur der Fahrzeugradbremse und/oder des Drehzahlsensors repräsentierenden Signals geschieht. Darüber hinaus kann die Veränderung des ersten Signals (Drehzahl) abhängig von einem die Versorgungsspannung des Drehzahlsensors repräsentierenden Signals getätigt werden.

Hierbei ist insbesondere daran gedacht, daß bei Überschreiten einer kritischen Temperatur der Sensoreinheit und/oder bei Unterschreiten der Versorgungsspannung unter einen kritischen Wert eine unter Umständen falsche Anzeige der Informationen, beispielsweise eines Bremsbelagverschleißes, unterbleibt. Die Temperatur der Fahrzeugradbremse und/oder des Drehzahlsensors bzw. die Unterspannung wird dabei durch entsprechende Sensoren bzw. Schaltungen und Komparatoren erfaßt.

Die zweite Variante (Offset auf n-ten High-Pegel) hat dabei noch den Vorteil, daß ein eventuell auftretendes Prellen der obenerwähnten Komparatoren bzw. Sensorschaltungen keine unkorrekte Anzeige zur Folge hat, da der Offset erst nach Ablauf von n High-Pegeln initiiert wird. Ein Hystereseverhalten als Gegenmaßnahme gegen ein solches Prellen ist durch die zweite Variante vorteilhafterweise nicht mehr erforderlich.

Weiterhin ist durch zweite Variante keine Hysterese erforderlich, die bei stehendem Fahrzeug oder stillstehendem Motor verhindert, daß der informationsabhängige, insbesondere bremsverschleißrelevante, Offset permanent einund ausgeschaltet wird und somit der (Rad-) Drehzahlauswertung fälschlicherweise eine (Rad-) Drehzahl vortäuscht.

Eine mögliche weitere Variante der Erfindung besteht in der Anwendung des erfindungsgemäßen Systems bei einer Fahrwerkregelung, bei der die Aufhängungssysteme (Feder, Dämpfer) der Radeinheiten verstellt werden. Hierbei werden im allgemeinen als wichtige Eingangssignale die Relativbewegungen zwischen dem Fahrzeugaufbau und den Rädern, die sogenannten Einfederbewegungen (Einfederweg, Einfedergeschwindigkeit), sensiert. Dabei ist beispielsweise auch eine Kenntnis über die Bewegungsrichtung (Druck- oder Zugstufe der Dämpfer/Federn) erforderlich. Erfindungsgemäß sind erste Mittel zur Erzeugung eines die Relativbewegung repräsentierenden ersten Signals und zweite Mittel zur Erzeugung wenigstens eines eine weitere Information repräsentierenden zweiten Signals vorgesehen. Die zweiten Mitteln können dabei derart ausgestaltet sein, daß das erzeugte zweite Signal eine Information darüber enthält, ob sich der Fahrzeugaufbau auf die Radeinheit zu- oder wegbewegt. Weiterhin sind dritte Mittel derart ausgestaltet, daß das erste Signal abhängig von dem zweiten Signal verändert werden kann.

Der Kern dieser Variante besteht darin, daß die ersten Mittel derart ausgelegt sind, daß das erste Signal wenigstens zwei erste Stromwerte und/oder wenigstens zwei erste Spannungswerte annimmt. Die dritten Mittel sind dann derart ausgestaltet, daß zur Veränderung des ersten Signals wenigstens einer der ersten Stromwerte und/oder wenigstens einer der ersten Spannungswerte wenigstens eine bestimmte Zeit abhängig von dem zweiten Signal zu einem zweiten Stromwert und/oder einem zweiten Spannungswert verändert werden kann.

Weitere vorteilhafte Ausgestaltungen sind den Unteransprüchen zu entnehmen.

Zeichnung

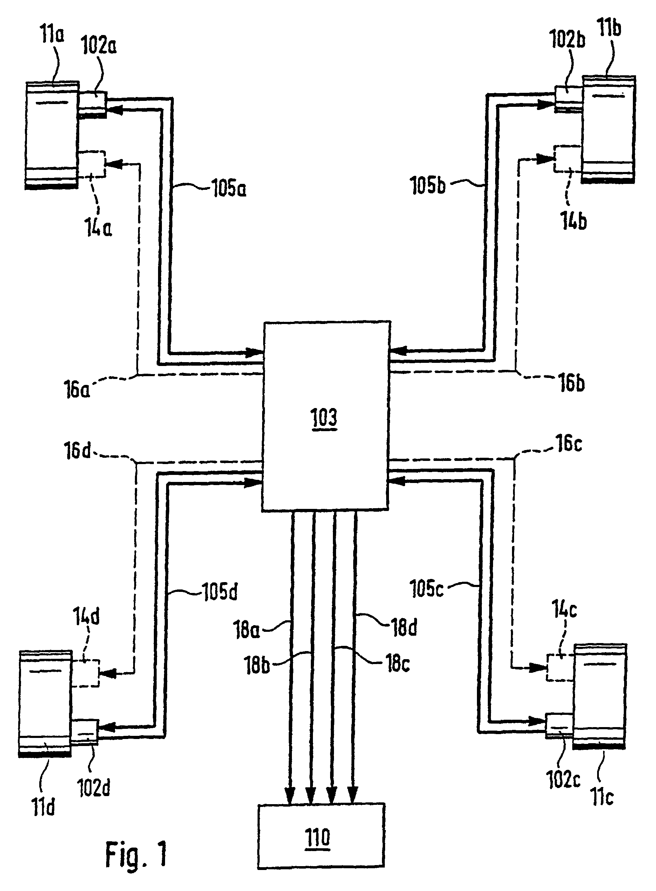

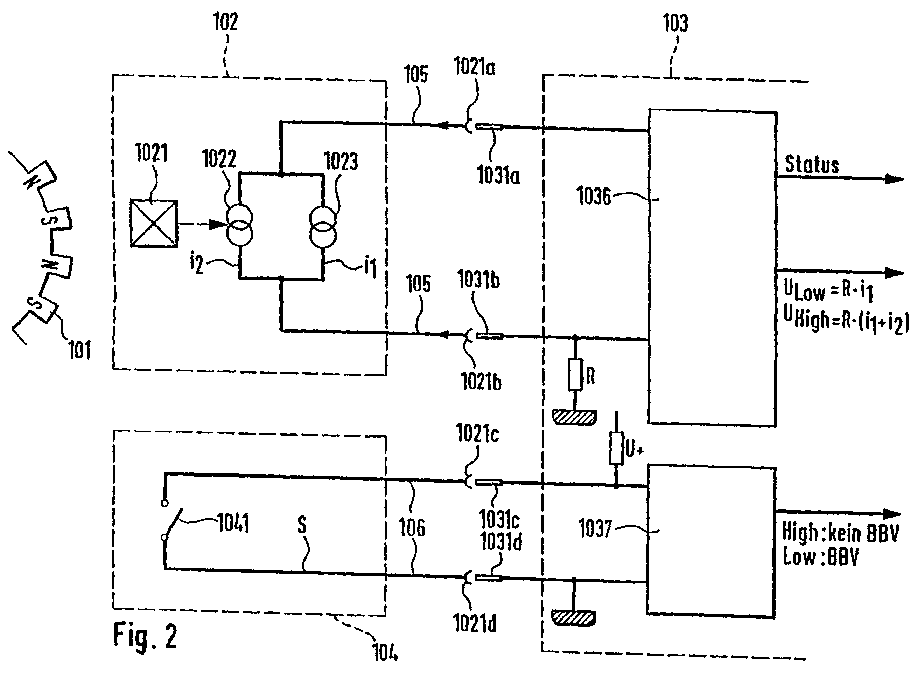

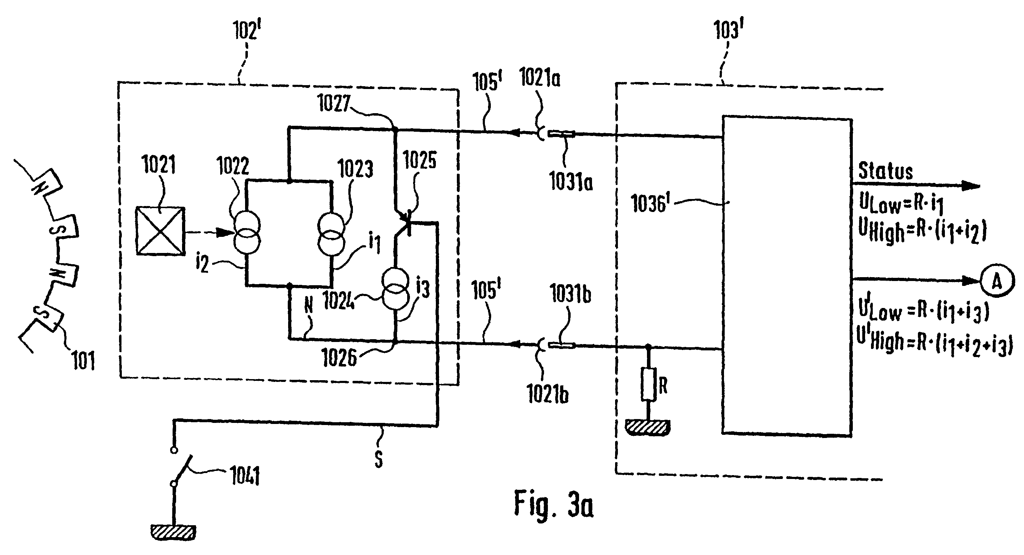

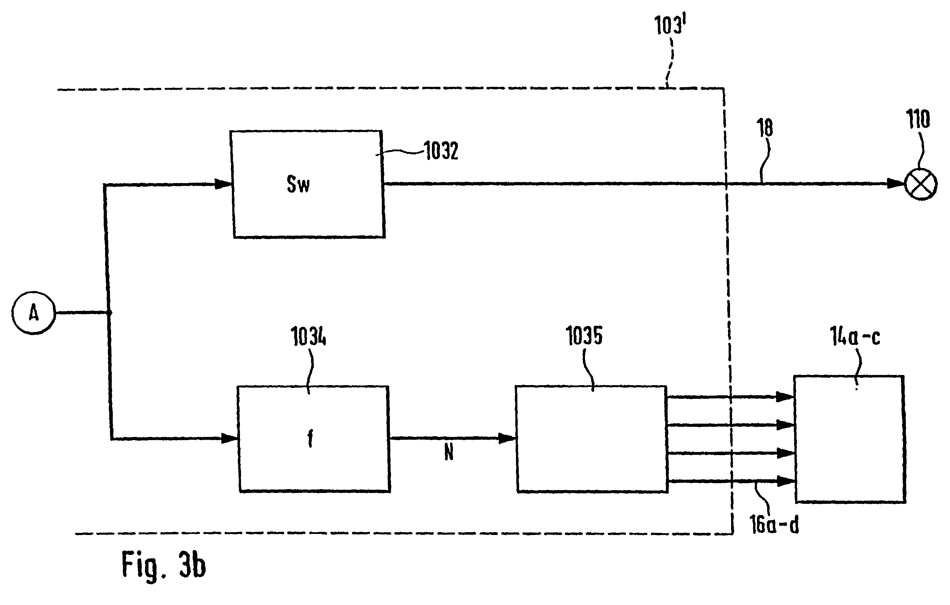

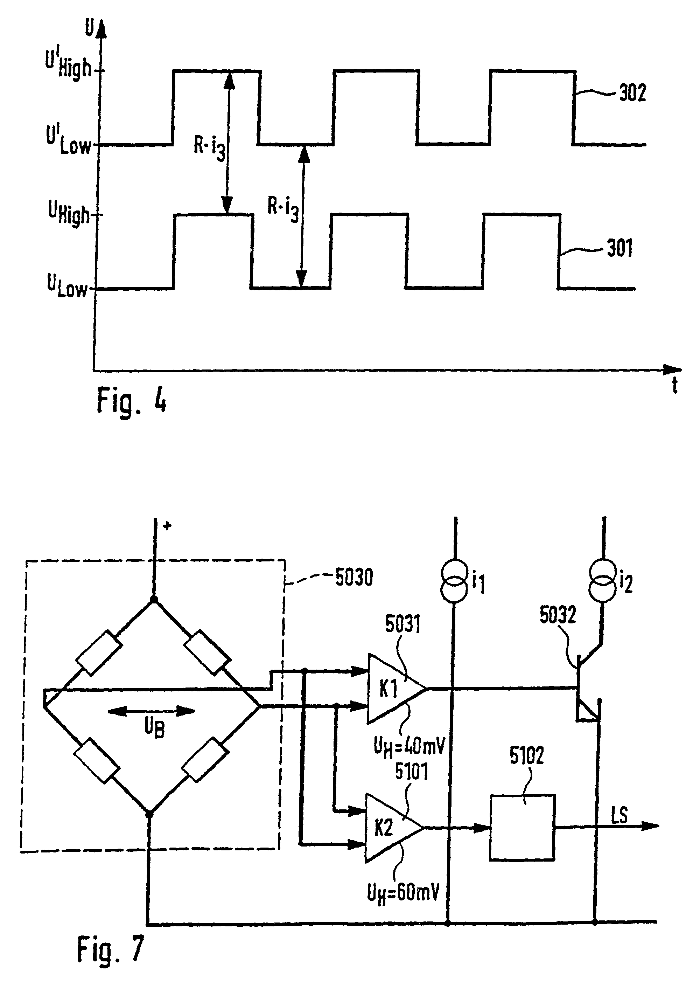

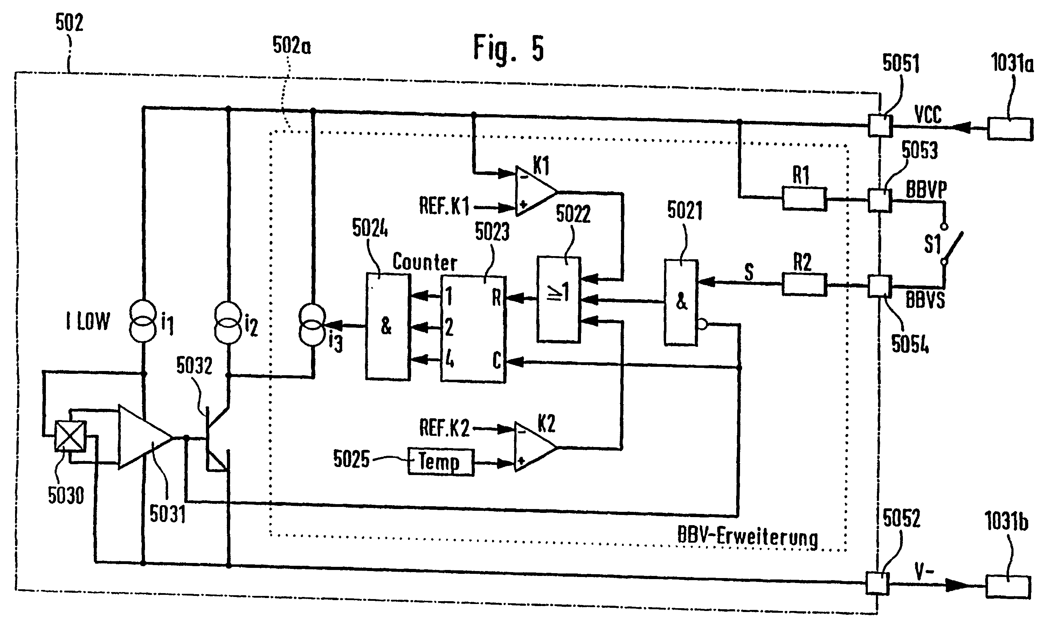

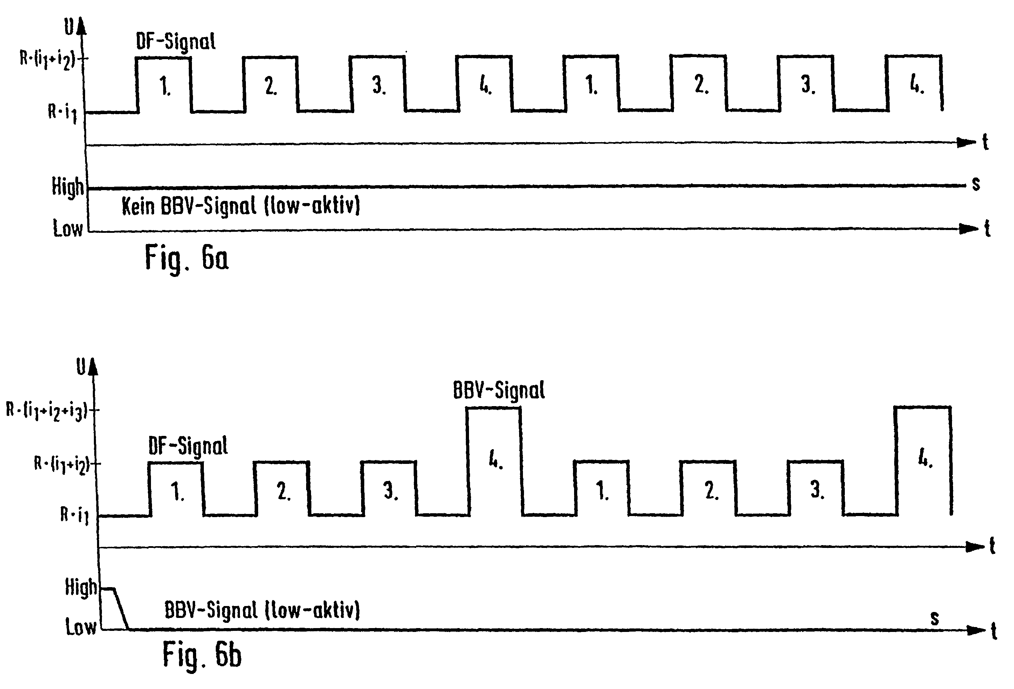

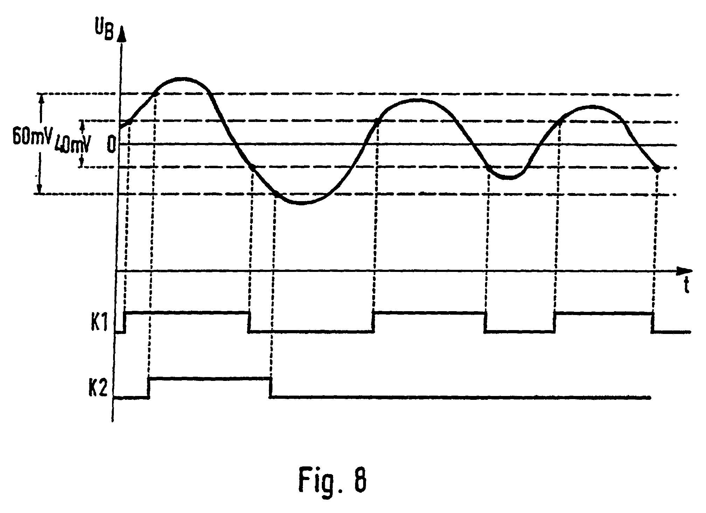

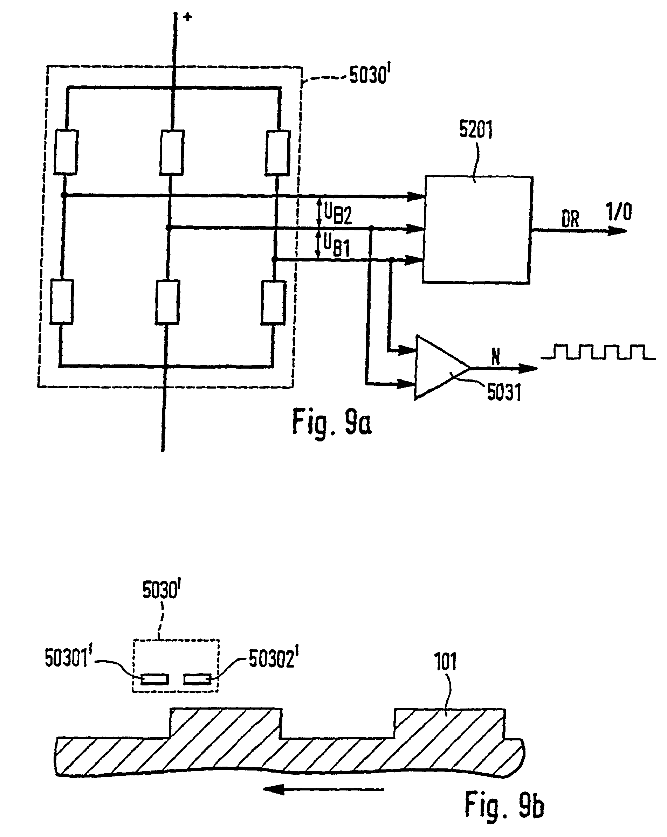

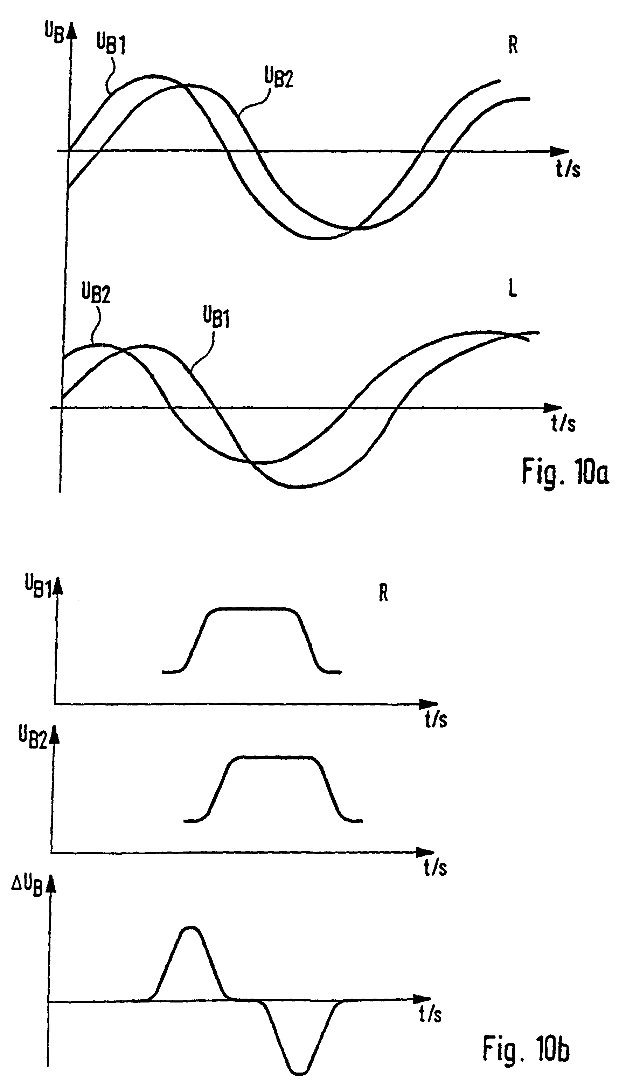

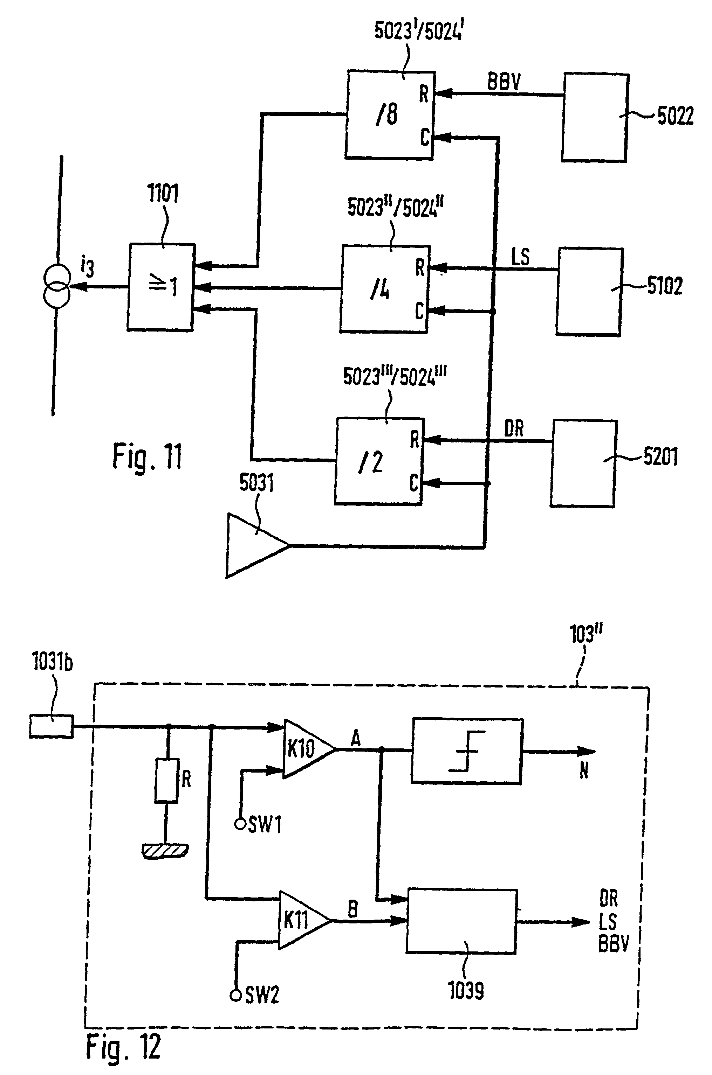

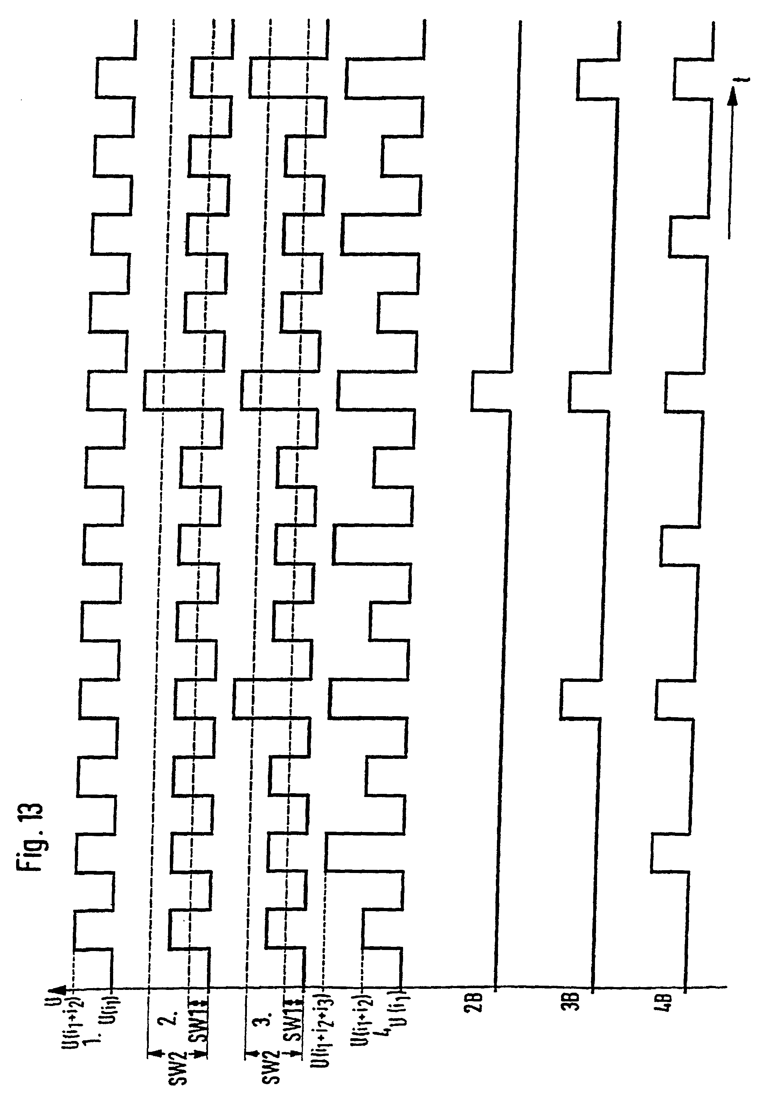

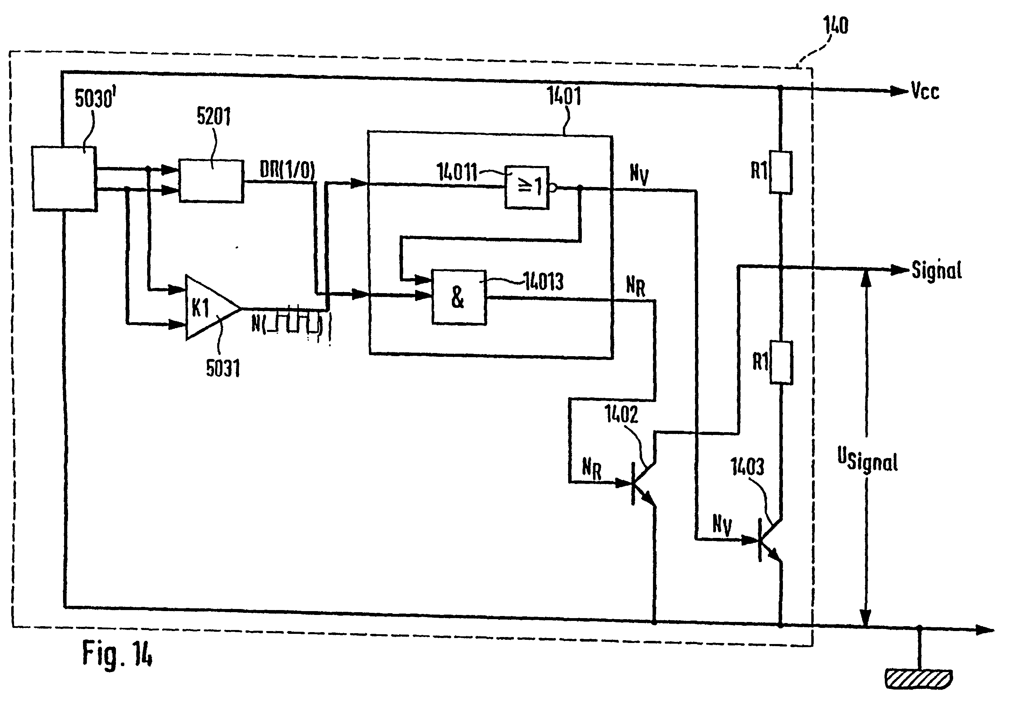

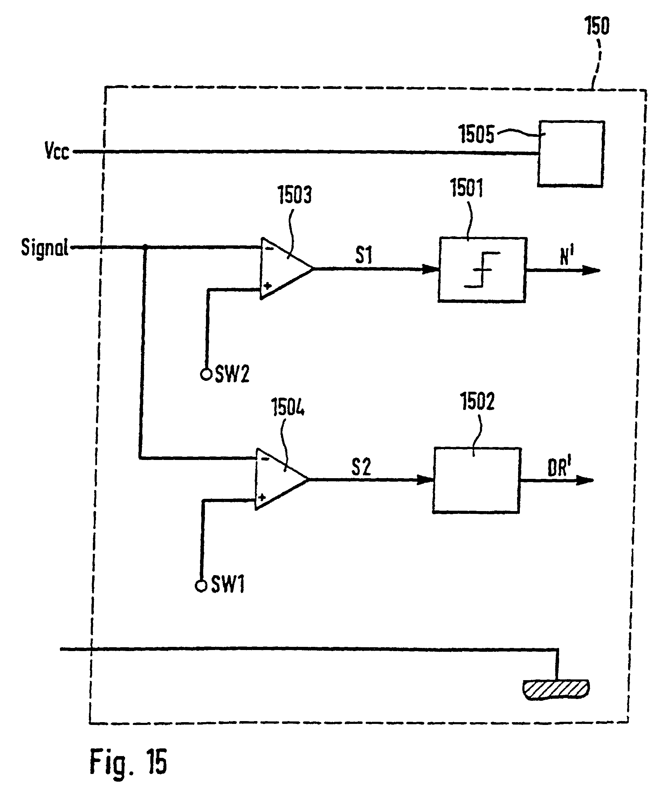

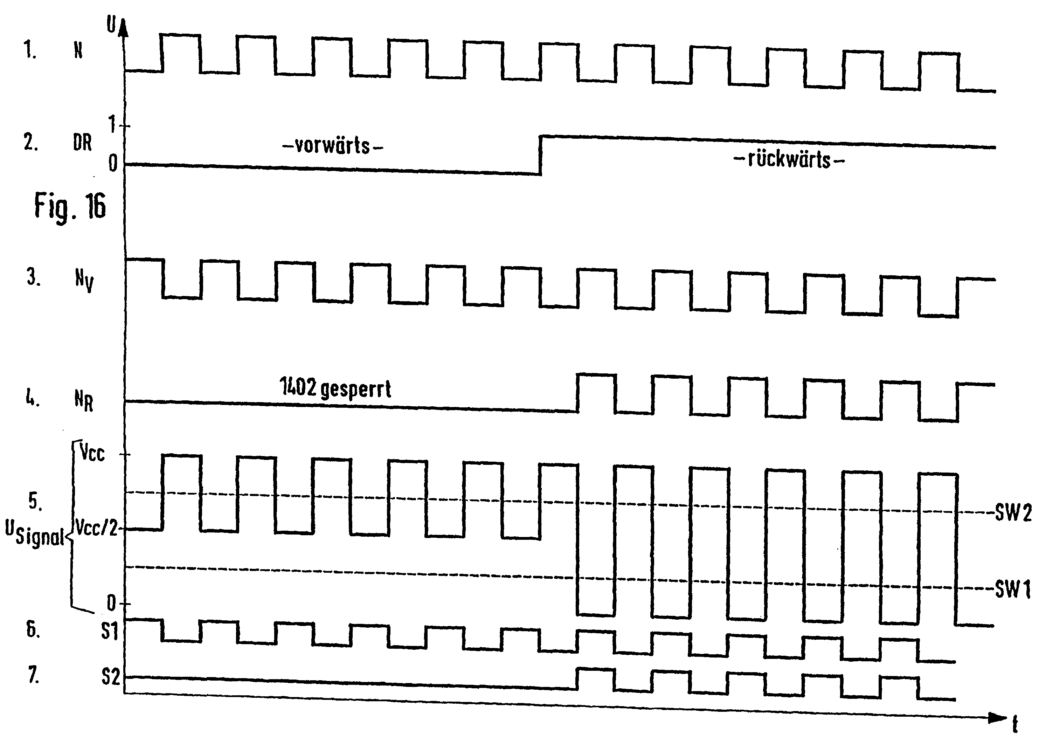

Die Figur 1 zeigt schematisch ein Blockschaltbild wie es aus dem Stand der Technik bekannt ist. Die Figur 2 zeigt eine einfache Kombination eines aktiven Drehzahlfühlers mit einer Bremsbelagverschleißerfassung. Die Figur 3 stellt mit den Teilen a und b eine erste Ausführungsvariante des erfindungsgemäßen Systems im Fall einer Bremsbelagerfassung anhand einer Schaltungsanordnung dar, während die Figur 4 zugehörige Signalverläufe wiedergibt. Eine zweite Ausführungsvariante des erfindungsgemäßen Systems im Fall einer Bremsbelagerfassung repräsentieren die Figuren 5 und 6. Die Figuren 7 und 9a und 9b zeigen mit den zugerhörigen Signalverläufen in den Figuren 8, 10a und 10b beispielhaft die Erfassung eines übermäßigen Luftspalts und der Drehrichtung des Rades. Die Figuren 11 und 12 zeigen Ergänzungen der in den Figur 5 und 3b gezeigten Schaltungsanordnungen mit den in der Figur 13 zu sehenden Signalverläufen. Die Figuren 14 und 15 zeigen eine weitere Ausführungsvariante der Erfindung mit den in der Figur 16 gezeigten Signalverläufen.

Ausführungsbeispiel

Anhand der im folgenden beschriebenen Ausführungsformen soll die Erfindung detailliert beschrieben werden.

Die Figur zeigt als Übersichtsblockschaltbild ein System zur Ermittlung des Bremsbelagverschleißes und von Raddrehzahlen bei einem Kraftfahrzeug.

Mit dem Bezugzeichen 11a-d sind dabei die Radeinheiten eines Kraftfahrzeugs bezeichnet. Zu diesen Radeinheiten gehören insbesondere die Räder, deren Umdrehungsgeschwindigkeiten (die Raddrehzahlen) gemessen werden sollen, und das zu jeder Radeinheit zugeordnete Bremssystem (Reibungsbremse). Mit dem Bezugzeichen 102a-d sind die jedem Rad zugeordneten Drehzahlfühler und Bremsbelagverschleißfühler bezeichnet, die, soweit es die Erfindung betrifft, anhand der Figur 2 bzw. 3 näher beschrieben werden. Zu dem über die Erfindung hinausgehenden Aufbau dieser Fühler soll ausdrücklich auf den eingangs erwähnten Stand der Technik verwiesen werden.

Die Ausgangssignale der Drehzahlfühler und Bremsbelagverschleißfühler 102a-d sind mit dem Steuergerät 103 verbunden, wobei mit 105a-d die Übertragungsleitungen dargestellt werden. Im Steuergerät 103 werden dann die mittels der Übertragungsleitungen 105a-d übertragenen Informationen zentral für alle Radeinheiten ausgewertet. Der Zustand der Bremsbeläge wird als Auswertungsergebnis vom Steuergerät 103 über die Leitungen 18a-d dem Anzeigeinstrument 110 zugeführt. Hierzu ist im allgemeinen vorgesehen, daß der Fahrer bei einem gewissen Abnutzungsgrad einer oder mehrere Bremsbeläge eine entsprechende Information zugewiesen bekommt.

Der Vollständigkeit halber sind mit den Bezugszeichen 14a-d noch die Bremssysteme der einzelnen Radeinheiten 11a-d skizziert, die vom Steuergerät 105 aus angesteuert werden können.

Die Figuren 2 und 3 zeigen verschiedene Ausführungsformen exemplarisch an einer einzigen Radeinheit.

Die Figur 2 zeigt dabei eine einfache Kombination eines aktiven Drehzahlfühlers mit einer Bremsbelagverschleißerfassung. Wie schon eingangs erwähnt kann als "aktiver" Drehzahlfühler 102 ein bekannter Hall-Drehzahlfühler oder ein bekannter magneto-resistiver Drehzahlfühler vorgesehen sein. In der Figur 2 ist hierzu schematisch zu sehen, daß ein Sensorelement 1021 einen inkrementalen Rotors 101 magnetischer passiver Art abtastet. Abhängig von den abgetasteten Inkrementen des Rotors 101 werden durch das Sensorelement 1021 zwei Strompegel $i_1$ und $i_2$ eingestellt. Dies ist in den Figur 2 mit dem Zu- bzw. Abschalten zweier Stromquellen 1022 und 1023 dargestellt.

Der Drehzahlfühler 102 ist mit dem Steuergerät 103 über die Leitungen 105 bzw. über die Steckverbindungen 1021a und b und 1031a und b verbunden. Der Eingangsverstärker 1036 detektiert mit Hilfe des Eingangswiderstandes R die den Strompegeln des Drehzahlfühlers 102 entsprechenden Spannungswerte

$$U_{Low} = R^* i_1$$

$$U_{High} = R^*(i_1 + i_2)$$

Ein typischer Verlauf bei im wesentlichen konstanter Raddrehzahl ist im unteren Signalzug 301 der Figur 4 zu sehen. Durch eine Auswertung der Frequenz dieses Signals gelangt man zur gewünschten Raddrehzahl.

Im unteren Teil der Figur 2 ist schematisch eine bekannte Erfassung 1104 des Bremsbelagverschleißes an einer Radbremse zu sehen. Wie schon eingangs erwähnt ermittelt der aus dem Stand der Technik an sich bekannte Bremsbelagverschleißfühler die Abnutzung des Bremsbelages einer Fahrzeugbremse, indem beispielsweise in einer gewissen Tiefe der Bremsbeläge Kontaktstifte eingelassen sind, die einen Kontakt auslösen, wenn der Bremsbelag bis zu dieser Tiefe abgenutzt ist. Dieser Kontakt ist in der Figur 2 mit dem Schalter $104_1$ bezeichnet. Der Schalter 1041 ist im Normalfall (keine anzeigerelevanter Bremsbelagverschleiß) offen, wobei die Spannung U+ nicht geerdet wird. Erreicht der Bremsbelag einen gewissen Abnutzungsgrad, so wird der Schalter 1041 geschlossen, was wegen der Erdung durch die Verbindung 106 bzw. die Steckverbindung 1012 und 1031 in der Auswerteschaltung 1037 detektiert wird.

Wie man bei dem in der Figur 2 gezeigten Ausführungsform erkennt, sind zur Übertragung der Raddrehzahlinformationen und der Informationen über den Zustand des Bremsbelages jeweils getrennte Signalleitungen 105 und 106 notwendig.

Anhand der Figur 3 soll nun das erfindungsgemäße System erläutert werden. Hierbei wurde der in der Figur 2 beschriebene Drehzahlfühler 102 um die zusätzliche Stromquelle 1024 ergänzt, die parallel zu dem in der Figur 2 gezeigten Drehzahlfühler angeordnet ist. Die zusätzliche Stromquelle 1024 kann mittels der Verbindungen 1027 und 1026 durch den Transistor 1025 in den Stromkreis zwischen Drehzahlfühler und Auswerteeinheit zugeschaltet werden.

Der Transistor 1025 wird durch das Signal S, das von dem schon anhand der Figur 2 beschriebenen Schalter 1041 ausgeht, angesteuert. Der Schalter 1041 ändert dann seinen Schaltzustand, wenn ein bestimmter Verschleiß des Bremsbelages erkannt wird.

In der Figur 3a ist der anhand der Einheit 102 der Figur 2 beschriebene Drehzahlfühler und die zusätzliche Stromquelle 1024 sowie der Transistor 1025 zu einer Einheit 102' zusammengefaßt dargestellt. Wird der Transistor 1025 auf Durchlaß geschaltet, so wird den obenbeschriebenen Strompegeln $i_1$ und $(i_1 + i_2)$ der Strom $i_3$ addiert, was zu den neuen, erhöhten Strompegeln $(i_1+i_3)$ und $(i_1+i_2+i_3)$ führt, die dem Steuergerät 103' zugeführt werden. Wird der Transistor 1025 durch den Schalter 1041 gesperrt, so werden die nicht erhöhten, schon anhand der Figur 2 beschriebenen Strompegel $i_1$ und $(i_1 + i_2)$ dem Steuergerät 103' zugeleitet.

Je nach dem Schaltzustand des Transistors 1025 und damit des Schalters 1041 detektiert der Eingangsverstärker 1036' mit Hilfe des Eingangswiderstandes R die den obengenannten Strompegeln entsprechenden Spannungswerte

$$U_{LOW} = R^* i_1$$

$$U_{High} = R^*(i_1 + i_2)$$

oder

$$U_{Low}' = R^*(i_1+i_3)$$

$$U_{High}' = R^*(i_1+i_2+i_3)],$$

je nach dem, ob ein Bremsverschleiß erkannt wurde oder nicht.

Neben dem schon beschriebenen typischen Verlauf 301 bei abgeschalteter zusätzlicher Stromquelle 1024 ist im oberen Signalzug 302 der Figur 4 der Signalverlauf bei eingeschalteter Stromquelle 1024 zu sehen. Der obere Signalverlauf 302 ist also gegenüber dem unteren 301 um den Offset $(R^*i_3)$ verschoben.

Durch eine Auswertung der Frequenz dieser im Signalzug 301 oder 302 gezeigten Signale im Block 1034 der Figur 3b gelangt man zur gewünschten Raddrehzahl N. Diese Drehzahl N kann dann der eigentlichen Brems-, Antriebs- oder sonstigen Regelung/Steuerung zugeführt werden. Im Falle einer Bremsoder Antriebs-Regelung/Steuerung werden abhängig von den detektierten Drehzahlen die Radbremsen 11a-d angesteuert (Signale 14a-d). Die Frequenzauswertung 1034 ist dabei derart ausgelegt, daß die Frequenz der Signalzüge 301 und 302 unabhängig von dem obengenannten, durch die Schaltstellung des Schalters 1041 bewirkten Offset ermittelt wird. Auf diese Art ist die Drehzahlerfassung in jedem Fall, also unabhängig von einem erkannten Bremsbelagverschleiß, sichergestellt. Dies ist für die Systemverfügbarkeit wichtig.

Neben der obengenannten Auswertung 1034 hinsichtlich der Raddrehzahlen werden die Signale 301 und 302 einem Schwellwertvergleich 1032 zugeführt. Durch diesen Schwellwertvergleich 1032 wird erkannt, ob der durch die Schalterstellung 1041 bedingte Offset $(R^*i_3)$ vorliegt oder nicht. Ausgangsseitig des Schwellwertvergleichs 1032 liegt also ein Signal. das darüber Aufschluß gibt, ob ein Bremsbelagverschleiß vorliegt oder nicht. Diese Information kann über eine Anzeige 110 dem Fahrer des Fahrzeugs mitgeteilt werden.

Insbesondere kann vorgesehen sein, daß der Schwellwertvergleich 1032 eine übliche Überprüfung der Eingangsschwellen eines Eingangsverstärkers auf einen Kurzschluß hin darstellt. Diese Überprüfung spricht auf eine Erhöhung des üblichen (ohne erkannten Bremsbelagverschleiß) Signals 301 um den Offset $(R^*i_3)$ an.

Diese Ausführungsform hat den Vorteil, daß an der Hardware des Steuergerätes bzw. dessen Eingangsverstärkers keine Änderungen gegenüber einem System ohne Bremsbelagverschleißerkennung notwendig werden. Es muß dann allerdings aber sichergestellt werden, daß zwischen einem erkannten Bremsbelagverschleiß [Offset $(R^*i_3)$] und einem Kurzschluß unterschieden werden kann.

Dies kann dadurch erreicht werden, daß der Eingangsverstärker über einen Testmodus verfügt. Über diesen Testmodus kann die Software im Steuergerät unterscheiden, ob es sich um einen "echten" Kurzschluß oder um einen erkannten Bremsbelagverschleiß handelt. Darüber hinaus wird ein Bremsbelagverschleiß nur höchst unwahrscheinlich gleichzeitig an allen Rädern des Fahrzeugs auftreten.

Wie schon erwähnt, ist in der Figur 3a der anhand der Einheit 102 der Figur 2 beschriebene Drehzahlfühler und die zusätzliche Stromquelle 1024 sowie der Transistor 1025 zu einer Einheit 102' zusammengefaßt dargestellt. Hierbei ist vor allem an eine Kombination von Drehzahl- und Bremsbelagverschleißerfassung in integrierter Bauweise gedacht. Solch einem Baustein, der im allgemeinen in der Nähe des Drehzahlfühlers, also im Bereich des inkrementalen Rotors 101, angebracht ist, wird dann das Signal S des in der Nähe des Bremsbelages angebrachten Schalter 1041 zugeführt.

Die Figur 5 zeigt eine zweite Ausführungsvariante der Erfindung. Hierbei ist mit dem Bezugszeichen 502 eine Einheit bezeichnet, die, ähnlich wie die obenbeschriebene Einheit 102', die eigentliche Drehzahlerfassung und Teile der Erfassung des Bremsbelagverschleißes zusammenfaßt. Die Einheit 502 ist über die Verbindungen 5051 und 5052 mit den Eingängen 1031a und 1031b eines in der Figur 5 nicht dargestellten Steuergerätes verbunden. Diese Steuergerät wird anhand des in der Figur 3a und 3b dargestellten Blockschaltbildes der Einheit 103' weiter unten genauer erläutert. Weiterhin ist die Einheit 502 über die Verbindung 5053 und 5054 mit dem Bremsbelagschalter S1 (entspricht dem Schalter 1041 der Figuren 2 und 3a) verbunden. Der Schalter S1 ist in diesem Ausführungsbeispiel im Normalfall (keine anzeigerelevanter Bremsbelagverschleiß) geschlossen.

Die eigentliche Drehzahlerfassung geschieht analog zu der anhand der Figur 2 bzw. 3a beschriebenen dadurch, daß ein "aktiver" Drehzahlfühler, z.B. ein bekannter Hall-Drehzahlfühler oder ein bekannter magneto-resistiver Drehzahlfühler, vorgesehen sein. In der Figur 2 ist hierzu schematisch zu sehen, daß ein Sensorelement 1021 einen inkrementalen Rotors 101 magnetischer passiver Art abtastet. Abhängig von den abgetasteten Inkrementen des Rotors 101 werden durch das Sensorelement 1021 zwei Strompegel $i_1$ und $i_2$ eingestellt. Dies ist in den Figur 2 mit dem Zu- bzw. Abschalten der Stromquelle $i_2$ bzw. 1022 dargestellt. Die Figur 5 zeigt hierzu dasselbe Drehzahlerfassungssystem in einer anderen Darstellung. Der inkrementale Rotor (101 in Fig.2 und 3a) ist dabei nicht dargestellt und das Sensorelement (1021 in Fig.2 und 3a) ist mit dem Bezugszeichen 5030 und 5031 dargestellt. Das Einschalten der Stromquelle

$i_2$ (High-Level) geschieht dabei durch ein Schalten des Transistors 5032. Der Block 5030 soll eine an sich bekannte Sensorschaltung in Form einer Wheatstone-Brücke repräsentieren, wodurch mittels des Operationsverstärkers 5031 und des Transistors 5032 die Stromquelle $i_2$ zu- bzw. abgeschaltet wird. Auf diese Weise erhält man durch die anhand der Figur 2 bzw. 3a und b beschriebene Auswertung das Drehzahlsignal, das im unteren Signalzug der Figur 4 bzw. in der Figur 6a zu sehen ist. Kern dieser Ausführungsvariante ist die Ausgestaltung der Bremsbelagverschleiß-Erweiterung (BBV-Erweiterung) 502a.

Erreicht der Bremsbelag einen gewissen Abnutzungsgrad, so wird der Schalter S1 geöffnet. Durch die geöffnete Stellung des Schalters S1 soll der obere in der Figur 5 gezeigte Eingang des logischen UND-Gatters 5021 mit einem Low-Pegel belegt werden, bei geschlossenen Schalter S1 weist dann dieser Eingang des UND-Gatters 5021 einen High-Pegel auf. Das Ansteuersignal des Transistors 5032 wird invertiert auf den unteren Eingang des logischen UND-Gatters 5021 geführt. Das heißt, daß eine Ansteuerung des Transistors 5032 (Zuschaltung des Stromquelle $i_2$, High-Pegel des Drehzahlsignals) als Low-Pegel (invertiert) am logischen UND-Gatters 5021 anliegt. Eine durch den Transistor abgeschaltete Stromquelle $i_2$ (Low-Pegel am Transistor 5032) bedeutet durch die Invertierung bedingt ein Anliegen eines High-Pegels am unteren Eingang des UND-Gatters 5021. Ausgangsseitig liegt am UND-Gatter 5021 dann ein High-Pegel an, wenn kein anzeigerelevanter Bremsbelagverschleiß (Schalter S1 geschlossen, oberer Eingang des UND-Gatters liegt auf High-Pegel) vorliegt und gleichzeitig die Stromquelle $i_2$ abgeschaltet ist. Ansonsten befindet sich der Ausgang des UND-Gatters auf dem Low-Pegel.

Der Ausgang des UND-Gatters 5021 liegt an dem Eingang des logischen ODER-Gatters 5022. Darüber hinaus sind mit den anderen beiden Eingängen des ODER-Gatters 5022 die Komparatoren K1 und K2 verbunden.

Der Komparator K1 vergleicht die Eingangsspannung VCC der Sensoreinheit 502 mit einem vorgebbaren Schwellwert REF.K1. Dies geschieht zur Erfassung von Unterspannungen, die den ordnungsgemäßen Betrieb der Einheit 502 beeinträchtigen können. Tritt eine solche Unterspannung auf, ist also VCC kleiner als REF.K1, so wird an den oberen Eingang des ODER-Gatters 5022 ein High-Pegel gelegt. Ansonsten liegt dieser Eingang auf dem Low-Pegel.

Der Komparator K1 vergleicht die durch den Temperaturfühler 5025 erfaßte Temperatur mit einem vorgebbaren Schwellwert REF.K2. Der Temperaturfühler 5025 mißt dabei die Temperatur, der die Sensoreinheit 502 unterworfen ist. Dabei ist der Temperaturfühler 5025 in bekannter Weise direkt in den integrierten Schaltkreis (IC) der Sensoreinheit 502 integriert, beispielsweise als Diode, deren temperaturabhängige Flußspannung gemessen wird. Die Temperaturmessung hat den Hintergrund, daß die Sensoreinheit 502 im allgemeinen radnah, also auch in der Nähe der Bremsscheiben angebracht ist. Die von Bremsscheiben ausgehende Hitze kann die Sensoreinheit 502 derart hoch erhitzen, daß der ordnungsgemäße Betrieb der Einheit 502 beeinträchtigen wird. Tritt eine solche Überhitzung ein, ist also die gemessene Temperatur größer als REF.K2, so wird an den unteren Eingang des ODER-Gatters 5022 ein High-Pegel gelegt. Ansonsten liegt dieser Eingang auf dem Low-Pegel.

Ausgangsseitig des ODER-Gatters 5022 liegt also dann ein High-Signal, wenn wenigstens einer der drei Eingänge auf dem High-Pegel aufweist, wenn also

- entweder eine Überhitzung des Sensoreinheit 502 oder
- eine Unterspannung oder
- kein anzeigerelevanter Bremsbelagverschleiß vorliegt und gleichzeitig die Stromquelle $i_2$ abgeschaltet ist.

Ansonsten liegt der Ausgang des ODER-Gatters auf dem Low-Pegel.

Der Ausgang des ODER-Gatters 5022 ist mit dem Reset-Eingang R des Counters 5023 verbunden. Auf ein High-Signal am R-Eingang hin wird der Counter 5023 zurückgesetzt. Der Clock-Eingang C des Counters 5023 ist mit dem Ansteuersignal für den Transistor 5032 verbunden. Der Eingang C erhält damit ein High-Pegel, wenn die Stromquelle $i_2$ eingeschaltet wird, und einen Low-Pegel, wenn die Stromquelle $i_2$ ausgeschaltet wird. Der in bekannter Weise als Flip-Flop-Schalter ausgelegte Counter 5023 wird also immer dann geschaltet, wenn die Stromquelle $i_2$ ein- bzw. ausgeschaltet wird. Der Counter 5023 hat drei Ausgänge, die dann einen High-Pegel aufweisen, wenn sich der am Clock-Eingang C anliegende Pegel das erste, zweite und vierte Mal von Low nach High geändert hat. Damit wird erreicht, daß an dem UND-Gatter 5024, dem die Ausgänge des Counters 5023 zugeführt werden, dann drei High-Pegel anliegen, wenn die Stromquelle $i_2$ das vierte Mal eingeschaltet wird. In diesem Fall (alle drei Eingänge des UND-Gatters 5024 liegen auf High) liefert das UND-Gatter ausgangsseitig auch ein High-Pegel, woraufhin die dritte Stromquelle $i_3$ eingeschaltet wird. Der Strom $i_3$ der Stromquelle $i_3$ wird dann dem zu diesem Zeitpunkt anliegenden Strom $(i_1+i_2)$ überlagert, was zu einem Gesamtstrom $(i_1+i_2+i_3)$ am Ausgang 5052 führt. Das Einschalten der Stromquelle $i_3$ kann dabei durch einen in Reihe zu dieser Stromquelle $i_3$ geschalteten, in der Figur 5 nicht dargestellten Transistor geschehen. Dies würde dann ähnlich wie das Zu- und Abschalten der Stromquelle $i_3$ durch den in der Figur 3a gezeigten Transistor 1025 geschehen.

Die Figur 6a zeigt das am Ausgang 5052 anliegende Signal, wenn der Schalter S1 geschlossen ist (kein anzeigerelevanter Bremsbelagverschleiß). Der im unteren Signalzug der Figur 6a gezeigte obere Eingang des UND-Gatters 5052 ist dann auf High eingestellt. Durch das ODER-Gatter 5022 wird dann der Counter 5023 (Eingang R) immer dann zurückgesetzt, wenn die Stromquelle $i_2$ ausgeschaltet wird. Auf diese Weise ist gewährleistet, daß die dritte Stromquelle $i_3$ nicht ausgeschaltet bleibt, wenn kein anzeigerelevanter Bremsbelagverschleiß vorliegt. Im Steuergerät 103' (Eingang 1031b) wird dann das am Ausgang 5052 anliegende Signal über den Widerstand R in eine Spannung umgewandelt, woraufhin mittels der schon beschriebenen Frequenzanalyse 1034 die Raddrehzahl N ermittelt wird.

Die Figur 6b zeigt den Verlauf des am Ausgang 5052 anliegenden Signals, wenn der Schalter S1 geöffnet ist (anzeigerelevanter Bremsbelagverschleiß). Der im unteren Signalzug der Figur 6b gezeigte obere Eingang des UND-Gatters 5052 ist dann auf Low eingestellt. Durch das ODER-Gatter 5022 wird dann der Counter 5023 (Eingang R) nur dann zurückgesetzt, wenn eine Unterspannung (Komparator K1) oder eine Übertemperatur (Komparator K2) vorliegt. Im Normalfall (weder Unterspannung noch Übertemperatur) liegt dann der R-Eingang des Counters 5023 auf Low, woraufhin bei jedem vierten Einschalten der Stromquelle $i_2$ die Stromquelle $i_3$ eingeschaltet wird. Dies führt zu dem in oberen Teil der Figur 6b zu sehenden Verlauf des Drehzahlsignals. Im Steuergerät 103' (Eingang 1031b) wird dann das am Ausgang 5052 anliegende Signal über den Widerstand R in eine Spannung umgewandelt, woraufhin mittels der schon beschriebenen Frequenzanalyse 1034 die Raddrehzahl N ermittelt wird. Zusätzlich wird durch den Schwellwertvergleich 1032 erkannt, ob der Pegel $R^*(i_1+i_2)$ überschritten wird. Dies ist im Fall eines anzeigerelevanten Bremsbelagverschleißes durch die Erhöhung des vierten Highpegels des Drehzahlsignals gegeben und wird in den Anzeigemitteln 110 zur Anzeige gebracht.

Die Figur 7 zeigt gemäß einer weiteren Ausführungsvariante der Erfindung beispielhaft die Erfassung eines übermäßigen Abstands eines Hall- beziehungsweise magnetoresistiven Sensors gegenüber dem schon beschriebenen Zahnkranz des Fahrzeugrades, dessen Drehgeschwindigkeit erfaßt werden soll. Bei dem Sensorelement 5030 handelt es sich um das mit demselben Bezugszeichen bezeichnete Sensorelement in der Figur 5. Wie schon dort erwähnt, handelt es sich bei dem Element 5030 um eine bekannte Wheatstone-Brücke mit einer typischen ringförmigen Anordnung von Widerständen. Durch das Vorbeigleiten der einzelnen Segmente des nicht dargestellten Zahnkranzes wird in dieser Wheatstone-Brücke die Brückenspannung $U_B$ erzeugt, die den Komparatoren 5031 und 5101 zugeführt werden. Der Komparator K1 entspricht dem in der Figur 5 mit demselben Bezugszeichen gekennzeichneten Komparator und dient zur Auswertung der Raddrehzahl. In dem Komparator K2 5101 findet eine weitere Auswertung der Brückenspannung derart statt, daß diese Brückenspannung mit einem relativ hohen Schwellwert $U_H$ verglichen wird. Zum Hintergrund der beiden Schwellwertvergleiche soll im folgenden auf die Figur 8 eingegangen werden.

Die Figur 8 zeigt einen typischen Signalverlauf der Brückenspannung über der Zeit. Je nach der Geschwindigkeit des Vorbeigleitens der einzelnen Segmente des Zahnkranzes nimmt die Brückenspannung periodisch zu beziehungsweise periodisch ab. Bleibt der Abstand, der Luftspalt, zwischen dem Zahnkranz und der Wheatstone-Brücke 5030 konstant, so weist die Brückenspannung eine konstante Amplitude auf. Wird dieser Abstand jedoch zu groß, so nimmt die Amplitude der Brückenspannung ab. Dieser Fall ist in der Figur 8 dargestellt.

Ein erster Schwellwertvergleich im Komparator 5031 vergleicht das Brückenspannungssignal mit einem relativ geringen Schwellwert, beispielsweise 40 mV. Ausgangsseitig liefert der Komparator 5031 dann das im unteren Signalverlauf K1 der Figur 8 gezeigte Ansteuersignal für die Stromquellen $i_1$ und $i_2$ (siehe Figur 5). Das Signal K1 repräsentiert also, auch bei einem sich vergrößernden Luftspalt, die Raddrehzahl. Der Komparator 5101 überprüft die Amplitude des Brückenspannungssignals dadurch, daß in diesem Komparator eine relativ hohe Schwelle von beispielsweise 60 mV eingestellt ist. Ist der Abstand zwischen dem Zahnkranz und der Wheatstone-Brücke, der Luftspalt, hinreichend gering, so liegt die Amplitude des Brückenspannungssignals oberhalb der Schwelle des Komparators 5101. Das Ausgangssignal des Komparators 5101 zeigt, wie im unteren Signalverlauf K2 in der Figur 8 zu sehen ist, im ordnungsgemäßen Fall mit einem zeitlichen Verzug des Signals K1 gegenüber dem Signal K1. Bleibt jedoch das Komparatorsignal K2 aus, so nimmt die Amplitude des Brückenspannungssignals ab, was auf einen übermäßigen Luftspalt schließen läßt.

Das Ausbleiben des Signals K2 wird in der Einheit 5102 detektiert, wobei ein Ausbleiben des Signals K2 eine Erzeugung des Signals LS zur Folge hat.

Zusammenfassend ist zu der Luftspalterkennung zu sagen, daß mit Hilfe eines aktiven Sensors, beispielsweise eines HallSensors oder eines magnetoresistiven Sensors, die Drehzahlsignale eines Rades erfaßt werden. Die Sensoren beinhalten eine Wheatstone-Brücke, die durch ein sich änderndes Magnetfeld verstimmt wird. Aus dieser Verstimmung wird das Signal für die Drehzahl gewonnen. Der Betrag der Verstimmung steht in einem festen Verhältnis zur Größe der Magnetfelddifferenz zwischen den beiden Brückenhälften. Die Magnetfelddifferenz ist unter anderem abhängig vom Abstand des Sensors zu dem Polrad. Bewertet man den Betrag der Brückenverstimmung, so kann man auf den Luftspalt zwischen dem Sensor und dem Polrad schließen. Diese Bewertung kann mit einem Komparator 5101 erfolgen, der eine größere Hysterese ($U_H$ = 60 mV) hat wie der normale Nutzsignalkomparator 5031 ($U_H$ = 40 mV). Ist der Luftspalt klein, so schalten beide Komparatoren, ist jedoch der Luftspalt zu groß, so schaltet nur noch der Nutzsignalkomparator 5031. Auf diese Weise hat man ein Frühwarnsystem für einen zu großen Luftspalt, ohne gleich die Raddrehzahlinformation zu verlieren. Diese Information kann beispielsweise als Bandendkontrolle bei der Kraftfahrzeugherstellung, in der Werkstatt oder während der Fahrt genutzt werden.

Die Figuren 9a und 9b zeigen beispielhaft die Auswertung zur Drehrichtungserkennung eines Rades. Hierzu ist in der Figur 9a ein gegenüber der Figur 7 beziehungsweise 5 modifizierter Hall- beziehungsweise magnetoresistiver Sensor 5030' vorgesehen. Die Modifikation besteht darin, daß die bekannte Wheatstone-Brücke, wie in der Figur 9a zu sehen ist, um weitere zwei Widerstände ergänzt worden ist. Statt der modifizierten Wheatstone-Brücke kann der modifizierte Hallbeziehungsweise magnetoresistiver Sensor auch aus wenigstens zwei separaten sensitiven Elementen 50301' und 50302' beziehungsweise zwei vollständige Wheatstone-Brücken (Figur 9b) aufweisen. Auch hier erzeugen die einzelnen Elemente des Zahnkranzes, Polrades beziehungsweise Geberrades (101, Figur 2, 3a und 9b) entsprechende Änderungen in den Brückenspannungssignalen $U_{B1}$ und $U_{B2}$. Diese Brückenspannungssignale werden der Auswerteeinheit 5201 zugeführt. Gleichzeitig wird zur Auswertung des Nutzsignals wenigstens eine der Brückenspannungssignale dem schon beschriebenen (Figur 5, 7 und 8) Komparator 5031 zugeführt. Die Funktion der Drehrichtungserkennung 5201 soll anhand der Figur 10a und 10b dargestellt werden.

In den Figuren 10a und 10b ist der Verlauf der in der Figur 9a gezeigten Brückenspannungssignale dargestellt. Hierzu kann der Verlauf über der Zeit t oder der Verrlauf über den Weg s beziehungsweise über dem Drehwinkel des Geberrades bestrachtet werden. Je nach Drehrichtung des Rades, wird entweder zuerst der rechte Teil der modifizierten Wheatstone-Brücke 5030' zuerst verstimmt oder der linke Teil. Bei einem Rechtslauf des Rades eilt die Brückenspannung $U_{B1}$ der Brückenspannung $U_{B2}$ voraus, während es bei einem Linkslauf des Rades umgekehrt ist. Mittels der Drehrichtungsauswertung 5201 wird die Phasenverschiebung der beiden Brückenspannungsverläufe ausgewertet, woraufhin das Signal DR dann erzeugt wird, wenn sich das Rad rückwärts bewegt. Alternativ hierzu kann, wie in der Figur 10b zu sehen ist, die Differenz $\Delta U_B$ zwischen den beiden Brückenspannungwerten $U_{B1}$ und $U_{B2}$ gebildet werden. Aus dem Verlauf dieser Differenz $\Delta U_B$, insbesondere aus den Lagen der Maxima und Minima (Peaks nach "oben" oder "unten") erhält man die Information DR über die Drehrichtung (vorwärts/rückwärts).

Die Figur 11 zeigt eine Erweiterung der Figur 5. Während die Figur 5 die Übertragung des Raddrehzahlsignals und des Bremsbelagverschleißsignals zur Steuereinheit 103 zum Gegenstand hat, soll durch die Erweiterung in der Figur 11 eine Übertragung des Drehrichtungssignals DR, des Luftspaltsignals LS und des Bremsbelagverschleißsignales BBV beschrieben werden. Hierzu wird als Ausgangssignal der Einheit 5022 (Figur 5) das Bremsbelagverschleißsignal BBV, das einen übermäßigen Bremsbelagverschleiß repräsentiert, dem Zähler 5023' beziehungsweise 5024' zugeführt. Das Ausgangssignal LS der Luftspalterkennung 5102 wird dem Zähler 5023'' und 5024'' zugeleitet, während das Ausgangssignal DR der Drehrichtungserkennung 5201 dem Zähler 5023''' beziehungsweise 5024''' als Eingangssignal zugeführt wird. Die drei Zähler werden durch das Ausgangssignal des Komparators 5031 (Figur 5) synchronisiert. Es findet also eine Synchronisation mit der Raddrehzahl statt.

Die drei in der Figur 11 gezeigten Zähler unterscheiden sich darin, daß sie eine Teilung durch 8, durch 4 und durch 2 vornehmen. Ausgangsseitig liegen alle 3 Zähler am Eingang des logischen ODER-Gatters 1101 an. Die zusätzliche Stromquelle $i_3$ (Figur 5) wird durch den Ausgang des ODER-Gatters 1101 angesteuert. Zur Funktionsweise der in der Figur 11 gezeigten Schaltung soll zunächst die Figur 13 beschrieben werden.

Im oberen Teil der Figur 13 (Signalzug 1) ist das normalerweise, das heißt ohne zusätzliche Informationsüberlagerung am Ausgang 5052 (Figur 5) des Sensorelements anliegende Raddrehzahlsignal zu sehen. Wird nun, beispielsweise gemäß der Figur 5, ein übermäßiger Bremsbelagverschleiß detektiert (Einheit 5022), so bewirkt das Signal BBV mittels des Zählers beziehungsweise Teilers 5023' und 5024' eine Erhöhung jedes achten High-Pegels des Raddrehzahlsignals. Dies ist im zweiten Signalverlauf in der Figur 13 zu sehen. Liegt ein übermäßiger Luftspalt vor, so wird durch den entsprechenden Zähler beziehungsweise Teiler eine Erhöhung jedes vierten High-Pegels bewirkt, was im dritten Signalverlauf der Figur 13 dargestellt ist. In gleicher Weise bewirkt eine erkannte Rückwärtsfahrt ein Heraufsetzen jedes zweiten Highpegels des Raddrehzahlsignals (vierter Signalzug der Figur 13). Das Raddrehzahlsignal (Signalzug 1 in der Figur 13) beziehungsweise das modifizierte Raddrehzahlsignal (Signalzüge 2, 3 und 4 der Figur 13) liegen am Ausgang 5052 (Figur 5) des Sensorelements 502 an. Dieses Signal wird zu der Steuereinheit 103 geführt, wo die in der Figur 12 gezeigte Auswertung stattfindet.

Über den Eingangsstecker 1031b wird das Eingangssignal über den Meßwiderstand R in einen entsprechenden Spannungswert umgewandelt. In einem ersten Komparator K10 wird das Signal mit einem relativ niedrigen Schwellwert SW1 verglichen. Dieser Schwellwert wird, wie in der Figur 13 zu sehen ist, derart niedrig gewählt, daß er von dem High-Level des normalen (ohne High-Pegel-Erhöhung) Drehzahlsignals ($i_1 + i_2$) beziehungsweise dem entsprechenden Spannungswert überschritten wird. Am Ausgang A liegt dann unabhängig von der erfindungsgemäßen Erhöhung des High-Pegels das Raddrehzahlsignal an, das in der Frequenzauswertung f zur Raddrehazhl N ausgewertet werden kann. Gleichzeitig werden die Spannungswerte dem Komparator $K_{11}$ zugeführt, wo das Spannungssignal mit einem relativ hohen Schwellwert SW2 verglichen wird. Wie in der Figur 13 zu sehen ist, überschreitet diesen hohen Schwellwert SW2 nur ein erfindungsgemäß erhöhter High-Pegel. Je nach Vorliegen einer Information (Rückwärtsfahrt, übermäßiger Luftspalt, übermäßiger Bremsbelagverschleiß) gelangt man am Ausgang des Komparators K11 zu den in der Figur 13 gezeigten Signalen 2B (Auswertung des zweiten Signalverlaufs), 3B (Auswertung des dritten Signalverlaufs) und 4B (Auswertung des vierten Signalverlaufs). Die Signalverläufe B werden in der Auswerteeinheit 1039 ausgeweretet.

Zur Auswerteeinheit 1039 ist zu bemerken, daß bei Vorliegen einer Rückwärtsfahrt (Signalzug 4 beziehungsweise 4B in der Figur 13) jeder zweite High-Pegel erhöht wird. Man gelangt so zu einem Signal 4B, das die halbe Frequenz der Raddrehzahl A aufweist. Durch einen Vergleich des Ausgangssignals B des Komparators K11 mit dem Raddrehzahlsignal A in der Auswerteeinrichtung 1039 gelangt man zu der Information, daß beispielsweise in dem in der Figur 13 mit dem Signalverlauf 4B gezeigten Fall eine Rückwärtsfahrt stattfindet. Dies kann als Ausgangssignal der Auswerteeinrichtung 1039 für die verschiedensten weiteren Informationsverarbeitungen zur Verfügung gestellt werden. Eine solche Information bezüglich einer Rückwärtsfahrt ist beispielsweise für sogenannte Hill-Holder oder Navigationssysteme sehr hilfreich.

Während eine Rückwärtsfahrt eindeutig erkannt werden kann, kann während des Vorliegens einer solchen Rückwärtsfahrt bei dieser Ausführungsform nicht ermittelt werden, ob ein übermäßiger Luftspalt und/oder ein übermäßiger Bremsbelagverschleiß vorliegt. Erst wenn die Rückwärtsfahrt des Fahrzeugs beendet ist und beispielsweise der Signalverlauf 3B an der Auswerteeinheit 1039 anliegt, so kann durch einen entsprechenden Frequenzvergleich mit der Raddrehzahl A darauf geschlossen werden, daß entweder ein übermäßiger Bremsbelagverschleiß oder ein übermäßig großer Luftspalt vorliegt. Da eine Rückwärtsfahrt des Fahrzeugs im allgemeinen nur relativ kurz andauert, ein übermäßiger Luftspalt oder ein übermäßiger Bremsbelagverschleiß in den seltensten Fällen gleichzeitig und spontan auftritt, stellt die Überlagerung der Informationen bei dieser Ausführungsvariante kein Problem dar. Ist die Rückwärtsfahrt beendet, und liegt ein übermäßiger Bremsbelagverschleiß vor, so wird durch einen Frequenzvergleich der Raddrehzahlfrequenz A mit der Frequenz des Signals 2B eindeutig auf einen übermäßigen Bremsbelagverschleiß geschlossen. Tritt jedoch das Signal 3B auf, so kann wiederum durch einen Frequenzvergleich auf das Vorliegen eines Luftspalts geschlossen werden.

In den bisher beschriebenen Ausführungsbeispielen wurde von einer Drehzahlerfassung eines Fahrzeugrades (wie schon erwähnt kann die Erfindung auch zur Erfasung einer Motordrehzahl verwendet werden) ausgegangen, bei der durch einen sogenannten aktiven Sensor wenigstens zwei Strompegel $i_1$ und $i_2$ erzeugt wurden. Wenigstens einer dieser Strompegel wurde dann zur Übertragung weiterer Informationen (Bremsbelagverschleiß, Luftspalt, Drehrichtung) durch einen dritten Strompegel $i_3$ verändert. Bei diesen Varianten wurden die Strompegel von der Sensoreinheit 502 (Figur 5) zur Steuereinheit 103' (Figur 3) übertragen. Dies hat den Vorteil, daß lediglich eine Zwei-Draht-Verbindung zwischen der Sensoreinheit 502 und der Steuereinheit 103' notwendig ist. Allerdings führen diese Varianten insbesondere bei einem Zuschalten der dritten Stromquelle $i_3$ zu einer gewissen Verlustleistung.

Vor diesem Hintergrund wird im folgenden eine Variante beschrieben, bei der die Informationen, insbesondere Drehzahl und Drehrichtung, durch unterschiedliche Spannungspegel von der Sensoreinheit 502 zur Steuereinheit 103' geführt werden. Hierbei ist zwar eine Drei-Draht-Verbindung (Spannungsversorgung, Masse, Signalleitung) zwischen der Sensoreinheit 502 und der Steuereinheit 103' notwendig, allerdings hat diese Variante Vorteile bezüglich der erwähnten Verlustleistung.

Die Figur 14 zeigt die Sensoreinheit 140, bei der mittels des schon beschriebenen Sensors 5030' (Figur 9 und 10) und des Komparators 5031 (Figuren 5, 7 und 9a) und der Drehrichtungserkennung 5201 (Figur 9 und 10) zum einen ein Drehzahlsignal N und zum anderen das Drehrichtungssignal DR erzeugt wird. Beide Signale sind in den oberen zwei Signalverläufen der Figur 16 dargestellt. Sowohl das Drehzahlsignal N als auch das Drehrichtungssignal DR weist zwei Spannungspegel "0" und "1" auf, wobei die Frequenz des Drehzahlsignals N die Drehzahl des Fahrzeugrades beziehungsweise die Motordrehzahl oder eine Getriebedrehzahl angibt. Das Drehrichtungssignal DR weist den Spannungspegel "0" auf, wenn eine Vorwärtsfahrt des Fahrzeugs beziehungsweise die Normaldrehrichtung des Fahrzeugmotors erfaßt wird. Das Drehrichtungssignal DR weist den Spannungspegel "1" auf, wenn eine Rückwärtsfahrt des Fahrzeugs beziehungsweise ein Rückdrehen des Fahrzeugmotors erfaßt wird.

In der Einheit 1401 werden diese Signale mittels des logischen UND-Gatters 14013 und der Invertierstufe 14011 bearbeitet, so daß ausgangsseitig der Einheit 1401 die Signale $N_V$ und $N_R$ anliegen. Der Verlauf dieser Signale ist den Signalverläufen 3. und 4. der Figur 16 zu sehen.

Die Signale $N_V$ und $N_R$ steuern nun die Transistoren 1402 und 1403 derart, daß ein "0"-Pegel des $N_V$-Signals den Transistor 1403 sperrt beziehungsweise ein "1"-Pegel des $N_V$-Signals den Transistor 1403 leitend schaltet. Der Transistor 1402 wird durch ein "0"-Pegel des $N_R$-Signals gesperrt beziehungsweise durch ein "1"-Pegel des $N_R$-Signals leitend geschaltet. Ist der Transistor 1402 leitend geschaltet, so liegt unabhängig von der Schaltstellung des Transistors 1403 ausgangsseitig der Sensoreinheit 140 auf der Signalleitung $U_{Signal}$ der Spannungspegel "0" an. Ist der Transistor 1402 gesperrt, so liegen je nach Drehzahl, abhängig von der Schaltstellung des Transistors 1403, ausgangsseitig der Sensoreinheit 140 auf der Signalleitung $U_{Signal}$ bei einer gleichen Dimensionierung der Widerstände R1 die Spannungspegel "VCC" und "VCC/2" an. Der Pegel "VCC" kommt dabei dadurch zustande, daß bei einer gleichzeitigen Sperrung der Transistoren 1402 und 1403 kein Strom mehr fließt, also kein Spannungsabfall an R1 vorliegt.

Zusammenfassend zur Sensoreinheit 140 (Figur 14 und 16) ergibt sich folgende Schalttabelle:

| DR | N | $N_R$ | $N_V$ | $U_{Signal}$ |
|---|---|---|---|---|
| 0 | 0 | 0 | 1 | VCC/2 |
| 0 | 1 | 0 | 0 | VCC |
| 1 | 0 | 1 | 1 | 0 |
| 1 | 1 | 0 | 0 | VCC |

N: Drehzahl (Rechtecksignal aus Aufbereitungsschaltung).

DR: Drehrichtung (DR=0: vorwärts, DR=1: rückwärts, aus Aufbereitungschaltung).

$N_R$: Drehzahl-Rechtecksignal zur Ansteuerung des Transistors 1402 (nur bei Rückdrehen aktiv, sonst 0).

$N_V$: Drehzahl-Rechtecksignal zur Ansteuerung des Transistors 1403 (immer aktiv).

$U_{signal}$:Ausgangssignal der Sensoreinheit 140.

Die Figur 15 zeigt die Auswertung des in der Sensoreinheit 140 erzeugten Signals $U_{signal}$. Die Versorgungsspannung VCC wird durch die Spannungsversorgung 1505 sichergestellt. Das Signal $U_{signal}$ (Signalzug 5. in der Figur 16) wird zwei Komparatoren 1503 und 1504 zugeführt, mittels der die Spannungspegel mit zwei Schwellwerten SW1 und SW2 verglichen werden. Diese beiden Schwellwerte sind im Signalzug 5. der Figur 16 eingezeichnet. Als Vergleichsergebnisse liegen ausgangsseitig der Komparatoren 1503 und 1504 die Signale S1 und S2 an, die in den Signalzügen 6. und 7. der Figur 16 skizziert sind. Die Frequenz des Signals S1 kann in der Frequenzauswertung 1501 zur Drehzahlermittlung ausgewertet werden, während in der Einheit 1502 festgestellt wird, ob das Signal S2 den High-Pegel erreicht, was auf eine Rückwärtsfahrt des Fahrzeugs beziehungsweise ein Rückdrehen des Fahrzeugmotors schließen läßt (Information DR').

Das so ermittelte Drehzahlsignal N' und das Drehrichtungssignal DR' wird in der Steuereinheit 150 weiter verarbeitet.

An dieser Stelle sei darauf hingewiesen, daß prinzipiel auch eine Kodierung des Drehrichtungssignals dadurch geschehen kann, daß bei einer vorliegenden Rückdrehung nicht jeder Low-Pegel des Drehzahlsignals abgesenkt wird (Signalzug 5., Figur 16), sondern es kann, analog zu der schon beschriebenen Figur 13 auch jeder n-te Signalpegel abgesenkt oder angehoben werden.

Da es im Falle einer Rückdreherkennung bei einem Verbrennungsmotor um eine möglichst schnelle Rückdreherkennung ankommt, ist es für diese Anwendung vorteilhaft, bei einer erfaßten Rückdrehung sofort jeden Pegel zu ändern.

**Patentansprüche**

1.  System zur Veränderung eines eine Drehbewegung repräsentierenden Signals mit

    -   ersten Mitteln [101, 1021, 1022, 1023; 5030, 5030', 5031, 5032] zur Erzeugung eines die Drehbewegung repräsentierenden ersten Signals, wobei das erste Signal wenigstens zwei erste Stromwerte und/oder wenigstens zwei erste Spannungswerte annimmt, und
    -   zweiten Mitteln [1041, 5101, 5102, 5201] zur Erzeugung wenigstens eines eine weitere Information repräsentierenden zweiten Signals, und
    -   dritten Mitteln [1024, 1025, 1026, 1027; 5021, 5022, 5023, 5024, 5023', 5024', 5023", 5024", 5023''', 5024''', 1101, 1401, 1402, 1403], mittels der das erste Signal abhängig von dem zweiten Signal derart verändert werden kann, dass zur Veränderung des ersten Signals wenigstens einer der ersten Stromwerte und/oder wenigstens einer der ersten Spannungswerte wenigstens eine bestimmte Zeit abhängig von dem zweiten Signal zu einem zweiten Stromwert und/oder einem zweiten Spannungswert verändert werden kann, wobei die Zeit, zu der die von dem zweiten Signal abhängige Erhöhung stattfindet, derart bestimmt wird, dass wenigstens einer der zwei ersten Stromwerte dann erhöht wird, wenn dieser Stromwert definiert häufig aufgetreten ist.

2.  System nach Anspruch 1, **dadurch gekennzeichnet, dass** das System bei einem Kraftfahrzeug Verwendung findet und das erste Signal die Drehzahl eines Fahrzeugrades, die Drehzahl eines als Benzin-, Diesel- und/oder Elektromotor ausgebildeten Fahrzeugmotors und/oder die Drehzahl einer mit dem Fahrzeuggetriebe wirkungsgekoppelten Welle repräsentiert.

3. System nach Anspruch 1, **dadurch gekennzeichnet, dass** die ersten Mittel insbesondere als ein aktiver Drehzahlfühler ausgebildet sind und die dritten Mittel derart ausgestaltet sind, dass zur Veränderung des ersten Signals wenigstens einer der ersten Stromwerte wenigstens eine bestimmte Zeit abhängig von dem zweiten Signal zu einem zweiten Stromwert erhöht werden kann.

4. System nach Anspruch 1, **dadurch gekennzeichnet, dass** die zweiten Mitteln [1041, 5101, 5102, 5201] zur Erzeugung eines den Bremsbelagverschleiß an wenigstens einer Fahrzeugradbremse repräsentierenden Signals und/oder zur Erzeugung eines die Richtung der Drehbewegung repräsentierenden Signals und/oder zur Erzeugung eines die Amplitude eines mit dem ersten Signal zusammenhängenden Signals repräsentierenden Signals ausgelegt sind.

5. System nach Anspruch 3, **dadurch gekennzeichnet, dass** die dritten Mittel eine Stromquelle [1024] aufweisen.

6. System nach Anspruch 5, **dadurch gekennzeichnet, dass** die dritten Mittel weiterhin Schaltmittel [1041, 1025; 5021, 5022, 5023, 5024] zum Zu- bzw. Abschalten einer Überlagerung eines durch die Stromquelle [1024] induzierten Stromes mit den wenigstens einer der zwei ersten Stromwerte aufweisen.

7. System nach Anspruch 5, **dadurch gekennzeichnet, dass** die dritten Mittel weiterhin Schaltmittel zum Ein- bzw. Ausschalten der Stromquelle [1024; 5023, 5024] aufweisen.

8. System nach Anspruch 6 oder 7, **dadurch gekennzeichnet, dass** die Schaltmittel einen ersten Schalter [1041] und einen zweiten, vorzugsweise als Transistor ausgebildeten zweiten Schalter [1025] aufweisen, wobei der erste Schalter [1041] räumlich im Bereich des Bremsbelages und der zweite Schalter [1025] räumlich im Bereich des Drehzahlfühlers [101, 1021, 1022, 1023; 502] angebracht sind.

9. System nach Anspruch 8, **dadurch gekennzeichnet, dass** der Schaltzustand des ersten Schalters [1041] abhängig von dem Grad des Bremsbelagverschleißes ist und der Schaltzustand des zweiten Schalters [1025] abhängig von dem Schaltzustand des ersten Schalters [1041] ist.

10. System nach Anspruch 3, **dadurch gekennzeichnet, dass** der aktive Drehzahlfühler zur Erzeugung der wenigstens zwei ersten Stromwerte wenigstens zwei Stromquellen [1022, 1023] aufweist.

11. System nach Anspruch 1, **dadurch gekennzeichnet, dass** Übertragungsmittel [105', 1021, 1031; 5051, 5052, 1031a, 1031b] zur Übertragung des ersten Signals oder des veränderten ersten Signals zu Auswertemitteln [103', 150] vorgesehen sind.

12. System nach Anspruch 11, **dadurch gekennzeichnet, dass** in den Auswertemitteln [103'] Wandlermittel [1036'] vorgesehen sind, mittels der die Stromwerte des ersten oder des veränderten ersten Signals in entsprechende spannungswerte gewandelt werden.

13. System nach Anspruch 11 oder 12, **dadurch gekennzeichnet, dass** in den Auswertemittel [103'] wenigstens ein Schwellwertvergleich [1032, K10, K11] vorgesehen ist, mittels dem die Stromwerte oder die entsprechenden Spannungswerte mit wenigstens einem Schwellwert [SW, SW1, SW2] verglichen werden und abhängig von dem Vergleichsergebnis Anzeigemittel [110] angesteuert werden können.

14. System nach Anspruch 1, **dadurch gekennzeichnet, dass** die definierte Häufigkeit abhängig von der zu übertragenden Information (Drehrichtung, übermäßiger Luftspalt, übermäßiger Bremsbelagverschleiß) unterschiedlich gewählt wird.

15. System nach Anspruch 14, **dadurch gekennzeichnet, dass** die ersten Mittel [101, 1021, 1022, 1023] derart ausgestaltet sind, dass das erste Signal periodisch die zwei ersten Stromwerte annimmt, und dass wenigstens einer der zwei ersten Stromwerte dann erhöht wird, wenn das erste Signal diesen Stromwert n-mal angenommen hat, wobei n eine gerade Zahl größer oder gleich Eins ist.

16. System nach Anspruch 14 oder 15, **dadurch gekennzeichnet, dass** die Zahl n abhängig ist von den unterschiedlichen, in den zweiten Mitteln erzeugten Signalen.

17. System nach Anspruch 1, **dadurch gekennzeichnet, dass** die dritten Mittel derart ausgestaltet sind, dass die Veränderung des ersten Signals

- abhängig von einem die Temperatur der Fahrzeugradbremse und/oder des Drehzahsensors repräsentierenden Signals [5025] und/oder
- abhängig von einem die Versorgungsspannung des Drehzahlsensors repräsentierenden Signals

getätigt wird.

**18.** System nach Anspruch 11, **dadurch gekennzeichnet, dass** das System bei einem Kraftfahrzeug Verwendung findet und das erste Signal die Drehzahl des als Benzin- und/oder Dieselmotors ausgebildeten Fahrzeugmotors repräsentiert und die zweiten Mitteln [5201] zur Erzeugung eines die Drehrichtung des Fahrzeugmotors repräsentierenden Signals ausgelegt sind und die Auswertemittel als Motorsteuergerät (150) zur Erzeugung von Zündungs- und/oder Einspritzsignalen ausgebildet sind, mittels dem auf ein erkanntes Rückdrehen des Fahrzeugmotors hin wenigstens einzelne Zündungssignale unterdrückt werden.

**19.** System zur Veränderung eines eine Relativbewegung zwischen einem Fahrzeugaufbau und einer Radeinheit repräsentierenden Signals mit

- ersten Mitteln zur Erzeugung eines die Relativbewegung repräsentierenden ersten Signals, wobei das erste Signal wenigstens zwei erste Stromwerte und/oder wenigstens zwei erste Spannungswerte annimmt, und
- zweiten Mitteln zur Erzeugung wenigstens eines eine weitere Information repräsentierenden zweiten Signals, und
- dritten Mitteln, mittels der das erste Signal abhängig von dem zweiten Signal derart verändert werden kann, dass zur Veränderung des ersten Signals wenigstens einer der ersten Stromwerte und/oder wenigstens einer der ersten Spannungswerte wenigstens eine bestimmte Zeit abhängig von dem zweiten Signal zu einem zweiten Stromwert und/oder einem zweiten Spannungswert verändert werden kann, wobei die Zeit, zu der die von dem zweiten Signal abhängige Erhöhung stattfindet, derart bestimmt wird, dass wenigstens einer der zwei ersten Stromwerte dann erhöht wird, wenn dieser Stromwert definiert häufig aufgetreten ist.

**20.** System nach Anspruch 19, **dadurch gekennzeichnet, dass** die zweiten Mitteln derart ausgestaltet sind, dass das erzeugte zweite Signal eine Information darüber enthält, ob sich der Fahrzeugaufbau auf die Radeinheit zu- oder wegbewegt.

**Claims**

**1.** System for changing a signal representing a rotary movement, having

- first means [101, 1021, 1022, 1023; 5030, 5030', 5031, 5032] for generating a first signal representing the rotary movement, the first signal assuming at least two first current values and/or at least two first voltage values, and
- second means [1041, 5101, 5102, 5201] for generating at least one second signal representing further information, and
- third means [1024, 1025, 1026, 1027; 5021, 5022, 5023, 5024, 5023', 5024', 5023'', 5024'', 5023''', 5024''', 1101, 1401, 1402, 1403], by means of which the first signal can be changed as a function of the second signal in such a way that, in order to change the first signal, at least one of the first current values and/or at least one of the first voltage values can be changed at least for a specific time as a function of the second signal to form a second current value and/or a second voltage value, the time at which the increase as a function of the second signal takes place being determined in such a way that at least one of the two first current values is increased when this current value has occurred a defined number of times.

**2.** System according to Claim 1, **characterized in that** the system is used in a motor vehicle, and the first signal represents the rotational speed of a vehicle wheel, the rotational speed of a vehicle engine which is embodied as a petrol engine, diesel engine and/or electric motor, and/or the rotational speed of a shaft which is effectively coupled to the vehicle gearbox.

**3.** System according to Claim 1, **characterized in that** the first means are embodied in particular as an active rotational speed sensor, and the third means are configured in such a way that, in order to change the first signal, at least one of the first current values can be increased at least for a specific time as a function of the second signal to form a second current value.

4. System according to Claim 1, **characterized in that** the second means [1041, 5101, 5102, 5201] are configured to generate a signal representing the brake lining wear on at least one vehicle wheel brake and/or to generate a signal representing the direction of the rotary movement and/or to generate a signal representing the amplitude of a signal which is associated with the first signal.

5. System according to Claim 3, **characterized in that** the third means have a power source [1024].

6. System according to Claim 5, **characterized in that** the third means also have switching means [1041, 1025; 5021, 5022, 5023, 5024] for switching on or off a superimposition of the at least one of the two first current values on a current induced by the power source [1024].

7. System according to Claim 5, **characterized in that** the third means also have switching means for switching the power source [1024; 5023, 5024] on and off.

8. System according to Claim 6 or 7, **characterized in that** the switching means have a first switch [1041] and a second switch [1025] which is preferably embodied as a transistor, the first switch [1041] being provided spatially in the region of the brake lining, and the second switch [1025] being provided spatially in the region of the rotational speed sensor [101, 1021, 1022, 1023; 502].

9. System according to Claim 8, **characterized in that** the switched state of the first switch [1041] is dependent on the degree of brake lining wear, and the switched state of the second switch [1025] is dependent on the switched state of the first switch [1041].

10. System according to Claim 3, **characterized in that** the active rotational speed sensor for generating the at least two first current values has at least two power sources [1022, 1023].

11. System according to Claim 1, **characterized in that** transmission means [105', 1021, 1031; 5051, 5052, 1031a, 1031b] are provided for transmitting the first signal or the changed first signal to evaluation means [103', 150].

12. System according to Claim 11, **characterized in that** converter means [1036'] by means of which the current values of the first signal or of the changed first signal are converted into corresponding voltage values are provided in the evaluation means [103'].

13. System according to Claim 11 or 12, **characterized in that** at least one threshold value comparison [1032, K10, K11] by means of which the current values or the corresponding voltage values are compared with at least one threshold value [SW, SW1, SW2] is provided in the evaluation means [103'], and display means [110] can be actuated as a function of the comparison result.

14. System according to Claim 1, **characterized in that** different selections of the defined frequency are made as a function of information (sense of rotation, excessive air gap, excessive brake lining wear) to be transmitted.

15. System according to Claim 14, **characterized in that** the first means [101, 1021, 1022, 1023] are configured in such a way that the first signal periodically assumes the two first current values, and **in that** at least one of the two first current values is increased if the first signal has assumed this current value n times, n being an even number greater than or equal to one.

16. System according to Claim 14 or 15, **characterized in that** the number n is as a function of the different signals generated in the second means.

17. System according to Claim 1, **characterized in that** the third means are configured in such a way that the change in the first signal is made

- as a function of a signal [5025] representing the temperature of the vehicle wheel brake and/or the rotational speed sensor, and/or
- as a function of a signal representing the supply voltage of the rotational speed sensor.

**EP 0 788 645 B1**

18. System according to Claim 11, **characterized in that** the system is used in a motor vehicle, and the first signal represents the rotational speed of the vehicle engine which is embodied as a petrol engine and/or diesel engine, and the second means [5201] are configured for generating a signal representing the sense of rotation of the vehicle engine, and the evaluation means are embodied as an engine control unit (150) for generating ignition signals and/or injection signals, by means of which engine control unit (150) at least individual ignition signals are suppressed in response to backward rotation of the vehicle engine being detected.

19. System for changing a signal representing a relative movement between a vehicle body and a wheel unit, having

   - first means for generating a first signal representing the relative movement, the first signal assuming at least two first current values and/or at least two first voltage values, and
   - second means for generating at least one second signal representing further information, and
   - third means by means of which the first signal can be changed as a function of the second signal in such a way that, in order to change the first signal, at least one of the first current values and/or at least one of the first voltage values can be changed at least for a specific time as a function of the second signal to form a second current value and/or a second voltage value, the time at which the increase as a function of the second signal takes place being determined in such a way that at least one of the two first current values is increased when this current value has occurred a defined number of times.

20. System according to Claim 19, **characterized in that** the second means are configured in such a way that the generated second signal contains information as to whether the vehicle body is moving towards or away from the wheel unit.

**Revendications**

1. Système pour modifier un signal représentant un mouvement de rotation comprenant :

   - des premiers moyens (101, 1021, 1022, 1023 ; 5030, 5030', 5031, 5032) pour obtenir un premier signal représentant le mouvement de rotation, ce premier signal prenant au moins deux premières valeurs d'intensité et/ou au moins deux premières valeurs de tension,
   - des deuxièmes moyens (1041, 5101, 5102, 5201) pour obtenir au moins un deuxième signal représentant une autre information,
   - des troisièmes moyens (1024, 1025, 1026, 1027 ; 5021, 5022, 5023, 5024, 5023', 5024', 5023", 5024", 5023"', 5024"', 1101, 1401, 1402, 1403), par l'intermédiaire desquels le premier signal peut, en fonction du deuxième signal, être modifié, de sorte que pour modifier le premier signal, on peut modifier au moins une des premières valeurs d'intensité et/ou au moins une des premières valeurs de tension, au moins pendant un certain temps en fonction du deuxième signal, pour obtenir une deuxième valeur d'intensité et/ou une deuxième valeur de tension, l'instant auquel a lieu l'augmentation dépendant du deuxième signal étant défini de manière qu'au moins une des deux premières valeurs d'intensité est élevée quand cette valeur se répète de manière définie.

2. Système pour modifier un signal selon la revendication 1,
   **caractérisé en ce que**
   ce système est utilisé dans un véhicule automobile et que le premier signal représente la vitesse de rotation d'une roue, celle d'un moteur à essence, diesel et/ou électrique de véhicule, et/ou la vitesse de rotation d'un arbre accouplé activement à la transmission de véhicule.

3. Système pour modifier un signal selon la revendication 1,
   **caractérisé en ce que**
   les premiers moyens sont notamment constitués par un détecteur actif de rotation et les troisièmes moyens sont configurés de manière que pour modifier le premier signal on puisse, pendant au moins un certain temps dépendant du second signal, élever au moins une des valeurs d'intensité à une deuxième valeur d'intensité.

4. Système pour modifier un signal selon la revendication 1,
   **caractérisé en ce que**
   les deuxièmes moyens (1041, 5101, 5102, 5201) sont conçus pour donner un signal représentant l'usure de garniture de frein sur au moins un frein de roue de véhicule et/ou un signal représentant le sens de rotation et/ou un signal représentant l'amplitude d'un signal au premier signal.

**5.** Système pour modifier un signal selon la revendication 3,
**caractérisé en ce que**
les troisièmes moyens comportent une source de courant (1024).

**6.** Système pour modifier un signal selon la revendication 5,
**caractérisé en ce que**
les troisièmes moyens comportent en plus des moyens de commutation (1041, 1025, 5021, 5022, 5023, 5024) pour produire ou interrompre la superposition d'un courant induit par la source de courant (1024) à au moins une des deux premières valeurs d'intensité.

**7.** Système pour modifier un signal selon la revendication 5,
**caractérisé en ce que**
les troisièmes moyens comportent de plus des moyens de commutation pour connecter ou couper la source de courant (1024, 5023, 5024).

**8.** Système pour modifier un signal selon les revendications 6 ou 7,
**caractérisé en ce que**
les moyens de commutation comportent un premier contacteur (1041) et un deuxième contacteur (1025) constitué par un transistor, le premier contacteur (1041) étant disposé dans l'espace près de la garniture de frein tandis que le second contacteur (1025) est disposé dans l'espace près du détecteur de vitesse de rotation (101, 1021, 1022, 1023, 502).

**9.** Système pour modifier un signal selon la revendication 8,
**caractérisé en ce que**
l'état de commutation du premier contacteur (1041) dépend de degré d'usure de la garniture de frein et l'état de commutation de second contacteur (1025) dépend de l'état de commutation du premier contacteur (1041).

**10.** Système pour modifier un signal selon la revendication 3,
**caractérisé en ce que**
le détecteur actif de vitesse de rotation, pour obtenir au moins les deux premières valeurs d'intensité, présente au moins deux sources de courant (1022, 1023).

**11.** Système pour modifier un signal selon la revendication 1,
**caractérisé en ce que**
des moyens de transmission (105', 1021, 1031, 5051, 5052, 1031a, 1031b) sont prévus pour transmettre à des moyens d'évaluation (103', 150) le premier signal ou le premier signal modifié.

**12.** Système pour modifier selon la revendication 11,
**caractérisé en ce qu'**
il est prévu dans les moyens d'évaluation (103') des moyens de conversion (1036') par lesquels les valeurs d'intensité de premier signal et du premier signal modifié sont transformées en valeurs de tension correspondantes.

**13.** Système pour modifier un signal selon la revendication 11 ou 12,
**caractérisé en ce qu'**
il est prévu dans les moyens de conversion (103') au moins une comparaison des valeurs de seuil (1032, K10, K11) par laquelle les valeurs d'intensité ou les valeurs de tension correspondantes peuvent être comparées à au moins une valeur de seuil (SW, SW1, SW2), des moyens indicateurs (100) peuvent être commandés en fonction du résultat de la comparaison.

**14.** Système pour modifier un signal selon la revendication 1,
**caractérisé en ce que**
la fréquence définie de répétition est choisie différemment en fonction de l'information à transmettre (sens de rotation, fente d'air excessive, usure de garniture de frein excessive).

**15.** Système pour modifier un signal selon la revendication 14,
**caractérisé en ce que**
les premiers moyens (101, 1021, 1022, 1023) sont configurés de manière que le premier signal présente périodiquement les deux premières valeurs d'intensité et qu'au moins une de ces valeurs est relevée quand le premier signal a présenté n fois cette valeur d'intensité, n étant un nombre entier au moins égal à un.

16. Système pour modifier un signal selon les revendications 14 ou 15,
    **caractérisé en ce que**
    le nombre n dépend des signaux différents produits dans les deuxièmes moyens.

17. Système pour modifier un signal selon la revendication 1,
    **caractérisé en ce que**
    les troisièmes moyens sont configurés de manière que la modification du premier signal soit effectuée :

    - en fonction d'un signal (5025) représentant la température de frein de roue d'automobile et/ou de détecteur de vitesse de roue, et/ou
    - en fonction d'un signal représentant la tension d'alimentation et/ou du détecteur de vitesse de rotation.

18. Système pour modifier un signal selon la revendication 11,
    **caractérisé en ce que**
    le système est utilisé dans un véhicule automobile, un premier signal représentant la vitesse de rotation du moteur à essence, et/ou diesel de l'automobile, tandis que les deuxièmes moyens (5201) sont conçus pour produire un signal représentant le sens de rotation du moteur du véhicule, les moyens d'évaluation sont constitués par l'appareil de commande du moteur (150) pour produire des signaux d'allumage et/ou d'injection au moyen desquels :

    - si une rotation en arrière de moteur est reconnue, l'appareil de commande interrompt au moins les signaux individuels d'injection.

19. Système pour modifier un signal représentant un mouvement relatif d'une structure de véhicule et d'une unité de roue, comprenant :

    - des premiers moyens pour obtenir un premier signal représentant le mouvement de rotation, ce premier signal prenant au moins deux premières valeurs d'intensité et/ou au moins deux premières valeurs de tension,
    - des deuxièmes moyens pour obtenir au moins un deuxième signal représentant une autre information,
    - des troisièmes moyens, par l'intermédiaire desquels le premier signal peut, en fonction du deuxième signal, être modifié, de sorte que pour modifier le premier signal, on peut modifier au moins une des premières valeurs d'intensité et/ou au moins une des premières valeurs de tension, au moins pendant un certain temps en fonction du deuxième signal, pour obtenir une deuxième valeur d'intensité et/ou une deuxième valeur de tension, l'instant auquel a lieu l'augmentation dépendant du deuxième signal étant défini de manière qu'au moins une des deux premières valeurs d'intensité est élevée quand cette valeur se répète de manière définie.

20. Système pour modifier un signal selon la revendication 19,
    **caractérisé en ce que**
    les deuxièmes moyens sont configurés de manière que le deuxième signal obtenu contienne une information indiquant que la structure du véhicule se rapproche ou s'éloigne de l'unité de roue.

Fig. 1

Fig. 2

Fig. 3a

Status
$U_{Low} = R \cdot i_1$
$U_{High} = R \cdot (i_1 + i_2)$

$U^1_{Low} = R \cdot (i_1 + i_3)$
$U^1_{High} = R \cdot (i_1 + i_2 + i_3)$

EP 0 788 645 B1

Fig. 3b

Fig. 4

Fig. 7

# Fig. 5

EP 0 788 645 B1

DF-Signal

Kein BBV-Signal (low-aktiv)

Fig. 6a

DF-Signal

BBV-Signal

BBV-Signal (low-aktiv)

Fig. 6b

25

Fig. 8

Fig. 9a

Fig. 9b

Fig. 10a

Fig. 10b

Fig. 11

Fig. 12

Fig. 13

Fig. 14

EP 0 788 645 B1

Fig. 15

Fig. 16

EP 0 788 645 B1